# EUROPEAN PATENT SPECIFICATION

(11) **EP 4 490 809 B1**
(45) Date of publication and mention of the grant of the patent: **06.05.2026**
(21) Application number: 23714832.5
(22) Date of filing: 09.03.2023
(51) Int. Cl.: H01Q 1/12, H05K 5/02, G12B 9/02, F16M 11/18, B66F 3/30, E04H 12/18, G01D 11/24, B65D 83/00, B66F 3/28, B66F 3/46, B66F 13/00, B66F 19/00

(54) **MODULAR SYSTEM FOR THE SHELTER, TRANSPORT, POSITIONING AND ELEVATION OF SENSOR VEHICLES ON THE TERRITORY**
MODULARES SYSTEM FÜR SCHUTZRAUM, TRANSPORT, POSITIONIERUNG UND ELEVATION VON SENSORFAHRZEUGEN AUF DEM GEBIET
SYSTÈME MODULAIRE POUR L'ABRITEMENT, LE TRANSPORT, LE POSITIONNEMENT ET L'ÉLÉVATION DE VÉHICULES CAPTEURS SUR LE TERRITOIRE

(30) Priority: 11.03.2022 IT 202200004661; 13.12.2022 IT 202200025398
(43) Date of publication of application: 15.01.2025
(73) Proprietor: Ciotola, Raffaele, 00184 Roma (IT)
(72) Inventor: Ciotola, Raffaele, 00184 Roma (IT)
(74) Representative: Cavattoni, Raimondi & Luppi Srl
(86) International application number: PCT/IB2023/052258
(87) International publication number: WO 2023/170626

(56) References cited:
- EP-A1- 3 555 391
- CN-A- 113 483 233
- CN-U- 212 519 696

## Description

### Field in which the invention is carried out

The present invention refers in general to the field of detection equipment to be placed on the territory such as radio antennas, telemetry instrumentation, surveillance cameras, telecommunications antennas, radar for terrestrial, aerial, coastal surveillance, infrared sensors for monitoring and preventing fires, laser devices etc.

More specifically, it refers to a solution that optimizes the arrangement of various types of sensor means to be placed on the territory for use on a transportable structure.

When these devices are not in use, they must be placed in a protected way, however ready to be transported to the position where installation is necessary.

Their use ranges from the civil field, an example is the surveillance of wooded areas with fire-fighting function, to the most varied application needs in the military/industrial field.

### State of the art

Systems that operate to optimize the portability and mobile management of various types of sensor means to be placed on the territory have been known for years.

The document EP 3 555 391 A1 deals with a transportable modular container system for sensors operating in elevation and mobility; for example in systems configurable to be used as a radio link or in emergencies such as earthquakes or saturation of telephone lines. This document discloses the preamble of claims 1 and 10.

In particular, it deals with a multifunctional system, in mobility, consisting of an apparatus that can have different functions, through dedicated devices included in it and a container having predetermined external dimensions and prepared for land, naval or air transport.

The multifunctional apparatus is fixed to the container and can assume at least two types of arrangement: a first transport layout in which the multifunctional apparatus is included within the predetermined external dimensions of the container, and a second lifting layout in which the multifunctional apparatus protrudes from the container in order to create a tower.

In addition, the multifunctional apparatus includes a cabin and a plurality of telescopic elements with lifting devices connected to the cabin and designed to raise the cabin, together with the telescopic elements, with respect to the container, so as to form the tower.

In CN 113 483 233 A the invention concerns a structure for three-dimensional, Internet-based, panoramic virtual multimedia projections, which includes a lower plane, a first pneumatic-type telescopic rod and a projection structure. The projection structure shall comprise a first projection device, and a second projection device which shall be placed at the upper end of the first device. Functional groups are provided which can assume positions with a large degree of freedom due to the sliding configuration of the various components of the structure. In fact, the document refers to two separate modules (one upper and one lower), however the lower module does not include any horizontally translating platform.

The utility model CN 212 519 696 U refers to the technical field of telecommunications, in particular to an apparatus for the transceival of signals in motion, which includes a basic body, in which the upper part of the base body is equipped with a groove on which an antenna support frame rises. The antenna support frame includes four support legs and a frame matched to the grooves for which significant flexibility is provided in the antenna mounting and raising activities.

The means sensors to be installed can be of various types: optical, infrared, laser, communication antennas, surveillance radar, sensors for fire or smoke detection, etc., in any case both in civil and military applications there are needs that unite these systems:
1. Custody and transportability of sensor means and services necessary for the operation of the system and need to guard/protect them when they are not operational.
2. Position of the sensor means during transport.
3. Volume occupied during transport.
4. Time taken to get the system up and running (deployment).
5. Height to which to lift the means sensors and their masses.
6. Rigidity of the position of the means inherent in the sensor when operational.

### 1 Storage and transportability

To meet the requirements listed above, the use of "Standardized Containers", known as "shelters", has been consolidated for a long time, which are nothing more than an evolution of the "Standardized Containers" used for freight transport.

These shelters have standard dimensions defined by an ISO standard that classifies them by length and height in order to make them compatible with transport by land, air, sea and rail. The ISO standard classifies standard containers equipped in each of the eight extreme corners of the parallelepiped, with locking elements called ISO Corners, these allow the attachment of the shelter to any transport platform, truck, plane, train or ship.

Finally, the standard establishes standard lengths, widths and heights expressed in "Feet", giving rise to solutions ranging from 10 to 45 feet ( 3.05 to 13.72 meters) in length and are coded as ISO10-ISO20- ISO30-ISO40-ISO45.

(See link:
https://sicurezzadelcarico.it/index.php/unita-di-trasporto/container/dimensioni-container-iso/)

In some circumstances, customized solutions outside the ISO standard are used, an example are drive-over towers that are towed by vehicles.

### 2 Position of sensor means during transport

The system that we are going to describe contemplates the purpose according to which the means inherent to the sensors, when sheltered and during transport, reside in the structure in the same position that it will assume when it will be operational.

This is important, because there are solutions in the known technique that involve the tipping of the means inherent in the sensor to move from the sheltering/ transport phases to the operational position. In these solutions, if the means inherent to the sensors contain tanks with liquids, oils, refrigerants, etc., the tipping generates major problems.

### 3 Volume occupied during transport.

In the structures responsible for the containment of the means sensors, various other equipment necessary for the operation of the system, electronic instruments, computers, environmental air conditioners, electric generators, radio links ... Etc. For this reason, the exploitation of the available internal volumes assumes great importance, the system described here aims to optimize the volume occupied/final performance ratio.

### 4 Deployment time to get the system up and running.

The organization described here also aims to minimize the time elapsed from when the shelter is unloaded from the vehicle that transports it to when the sensor means reach the operational position.

Deployment is a very delicate phase because a series of operations must be carried out in strict sequence and without the possibility of errors to ensure the safety of operators/employees.

These operations in sequence can be carried out manually or automated with special servomechanisms, in any case there will be safety devices (interlocks) to enable the transition from one phase to another only if the previous one has been successful.

### 5 Height to which to lift the means sensors and their masses.

The system described here allows, in a minimum space, the arrangement of three modules that working in collaboration with each other allow the elevation outside the containers - and the corresponding return to the place - of sensors with masses of the order of 1,000 Kg. at heights greater than 10 meters.

### 6 Rigidity of the position of the means inherent in the sensor when operational.

Many types of sensors require a high rigidity of the working position, this is the case of optical/laser systems, where cameras with powerful telephoto lenses can reach tens of kilometers of field of view, or directional antennas operating at very high frequencies. These are two examples of sensors where the rigidity of the position are fundamental for the quality of their work. The proposed system, allowing the use of large lifting columns, allows to achieve the goal of high rigidity.

These and other purposes, which will be clear in the course of the description, are obtained with a transportable modular container structure for the shelter, transport and elevation of operational sensor vehicles in mobility that includes the following modules cooperating with each other:
First vertically translation module: operates as a functional block according to the direction of the Z height of the container structure. It has the task of lifting the sensor means from the shelter/transport position to the external exposure position above the roof of the shelter.
Second horizontal rotation module: operates as a rotating functional block of a given angle in the XY plane, able to position a telescopic mast on the vertical of the means sensors.
Third constraint exchange module: during sheltering, transport and lifting, the sensor means are bound to the vertical translation platform for the blocking action of the third module; once the platform has been raised and the sensor means have been brought to the external exposure position above the roof of the shelter, the second horizontally rotating module brings the telescopic mast to collimate its axis with the axis of the sensor block; Subsequently, the telescopic mast is brought into contact with the base of the sensor block and it is in this condition that the third module proceeds to bind the sensor block to the telescopic mast and then release the sensor block from the platform of the vertical translation module.

In summary: the exchange of constraints allows the raising of the sensor block in the operating position, this can be done manually by screwing/unscrewing bolts, or by means of a manual or motorized device, as well as through the alternative of an automatic drive to be operated remotely.

What is evident from this type of interfacing is the fundamental functional characteristic of the transfer related to an automated plant consisting essentially of parts that interact and move according to pre-established and automatic operating phases such as to present the various component sections and the various operating units, which must accommodate them, so that they also intervene correctly and safely.

In particular, from the more properly constitutive point of view:
A first section module A includes:
i un platform with vertical translation MV (vertical movement) in the direction of the height Z of the container structure, between two extreme boundary positions;
ii columns with vertical path guide channels, according to the Z axis, which the platform is able to follow when operated;
iii means of sensors responsible for detecting physical environmental quantities;
iv flange stop means that block the sensor means integral to the platform both in conditions of sheltering and during the translational movement of the same upwards or downwards.

A second section module B includes:
a. an RO (horizontal rotation) module which is composed of a pivoting arm/structure bound to a fixed axis around which it can only rotate transversely to the horizontal plane XY between two predefined angles, one of OFF and one of ON, bounded in the horizontal plane XY;
b. an extendable mast/telescopic tower to bring the means sensors to maximum elevation in the detection conditions;
c. means suitable for the elevation of the mast/telescopic tower;
d. means of stopping with locking flanges and sealing of the sensor means integral to the telescopic tower, in the conditions of elevation of the telescopic tower itself.

A third section module C is configured as a device designed to exchange the constraints that fix the sensor block to the support/platform with vertical translation etc., transferring the fixing constraints to another support, in particular integral to the column/lifting mast of the sensormeans.

This C module dedicated to the switching of constraints, is fixed to the lower base of the sensor block and is located alternately, between the vertical translation platform of base support and the top flange of the telescopic tower (mast).

The drive of module C can be manual or motorized and must meet the fundamental requirement of never leaving free the component on which it is operating for the exchange of constraints.

As reported in claims 10-12, a different configuration of modules I and II is foreseen in the present invention, similar to modules A and B of the first embodiment, as a transportable modular container is created for the shelter, transport and elevation of operational sensor means in mobility that includes a first module and a second module side by side and cooperating with each other; the first module operates as a vertical translation functional block, according to the direction of the height Z of the container structure and the second module operates as a horizontal translation functional block, in the longitudinal direction X of the container structure.

In this case the first module includes:
i a platform with vertical translation between two extreme limit positions;
ii columns with channels to guide the path that the platform follows;
iii means of sensors responsible for detecting physical environmental quantities;
iv flange stop means that block the sensor means integral to the platform.

The second module includes in turn:
a a second modular structure with horizontal scrolling;
b guide channels in the path that the second platform is able to follow back and forth;
c. an extendable mast/telescopic tower to bring the sensor means to maximum elevation under detection conditions;
d. means suitable for elevating the telescopic tower (mast);
e. means of stopping with locking flanges and sealing of the sensor section integral to the telescopic tower, in the elevation conditions of the telescopic tower carrying the sensor means.

The two configurations differ because one refers to a system composed of two modules side by side, one with vertical sliding movement and one with rotation movement, transversely to the horizontal XY plane, while the other refers to a system composed of two modules side by side, one with vertical sliding movement and one with horizontal sliding movement.

In any case, the systems according to this invention overcome the stringent limitations of the solutions according to the known technique because they are used, each, indiscriminately in any containment/ transport structure, whether it is in compliance with the ISO standard or with customized dimensions.

According to the invention, the apparatus can be configured with precise specifications, for each type of application and situation on the territory.

### Brief description of the drawings

For the sole purpose of better clarifying the invention and without wanting to limit its scope of validity, the invention will be illustrated on the basis of a series of favorite achievements with reference to the attached figures, in which:
Figure 1a is a frontal view, Figure 1b is a side view and Figure 1c is an overall axonometric perspective view of the modular detection system according to the present invention.
Figure 2 is an axonometric view of the placement of square columns with vertical guidance and their rotation axis arrangement.
Figure 3 is an axonometric view of the two different modules dedicated to vertical movement in the Z direction and horizontal rotation in the XY plane.
Figure 4 is a different axonometric view of the arrangement in Figure 3 showing the elevation of the vertically translation platform.
Figure 5 is a different axonometric view of the configuration of Figure 4 in which the rotation of the rotating module responsible for raising the tower is highlighted.
Figure 6 is an axonometric view that highlights the modular elevation system with its sensor means when the mast module is closed.
Figure 7 shows the modular elevation system, according to the present invention, in an axonometric view with the sensor means raised and the mast rotated.
Figure 8 shows the modular elevation system, according to the present invention, in which the operational sensor means is raised with the mast to maximum elevation.
Figure 9 shows an axonometric view of a detail of the modular elevation system specifically related to the constraint switching module.
Figure 10 shows the detail of the modular elevation system relating specifically to the constraint switching modulus of Figure 9, so that the dotted components and the corresponding joined strokes, give an idea of the three-dimensional measurements involved and the behavior of the system in the execution of the kinematic translations of the various components.
Figures 11a, 11b, 11c show respectively a plan view, from above, a perspective axonometric view, and a sectional view of a detail of the modular elevation system relating specifically to the constraint switching module.
Figure 12 is an axonometric perspective view of the translation system implemented according to the present invention according to a different embodiment of the basic principle.
Figure 12a is a cross-sectional view of the translation system schematized in Figure 12.
Figure 12b is a further cross-sectional view of the translation system schematized in Figure 12.
Figure 12c is a plan view of the translation system schematized in Figure 12.
Figure 13 is an axonometric perspective view of the translation system implemented according to the second configuration, described, of the present invention that schematically shows the lifting and translation actions respectively of the first and second platform involved.
Figure 13a is a cross-sectional view of the translation system schematized in Figure 13.
Figure 13b is a further cross-sectional view of the translation system schematized in Figure 13.
Figure 13c is a plan view of the translation system schematized in Figure 13.
Figure 14 is an axonometric perspective view of the translation system implemented according to the second typical embodiment, of the present invention that schematically shows the final configuration following the complete lifting and translation of the first and second platform involved respectively.
Figure 14a is a cross-sectional view of the translation system schematized in Figure 14.
Figure 14b is a further cross-sectional view of the translation system schematized in Figure 14.
Figure 14c is a plan view of the translation system schematized in Figure 14.
Figure 15 is a perspective view of the container/shelter in the condition of shelter and transport of the system according to the second embodiment typical of the present invention.
Figure 15a is a cross-sectional view of the shelter shown in Figure 15.
Figure 16 is a perspective view of the shelter in the partial lifting condition of the platform that translates vertically into the system according to the present invention.
Figure 16a is a cross-sectional view of the shelter shown in Figure 16.
Figure 17 is a perspective view of the shelter in the condition of complete lifting of the platform that translates vertically of the system according to the present invention.
Figure 17a is a cross-sectional view of the shelter shown in Figure 17.
Figure 18 is a perspective view of the container /shelter in the condition of complete displacement of the platform moving horizontally in the system according to the present invention.
Figure 18a is a cross-sectional view of the shelter shown in Figure 18.
Figure 19 is a perspective view of the shelter in the partial elevation condition of the telescopic tower in the system according to the present invention.
Figure 19a is a cross-sectional view of the shelter shown in Figure 19.

### Description of preferred embodiments

The device shown in the figures consists of three interfaced functional modules, henceforth module A, module B and a third interface module C interoperable between modules A and B; module A can only perform vertical translational motions while module B can rotate horizontally between two predefined angular positions in the XY plane.

In module A the functional block 1 hereinafter also called lift system 1 has a sliding platform 3, on this sliding platform 3, vertically translating (in the direction of height Z), there are bound means sensors 8 (also called sensor block 8) to be brought into the operational position.

In other words, module A consists of a vertically translating lift 1 device, which uses sliding platform 3 with vertical sliding only, in the direction of the height Z, with guidance on columns 7', 7", 7"', 7', also vertical. Movement is limited between two extreme vertical positions.

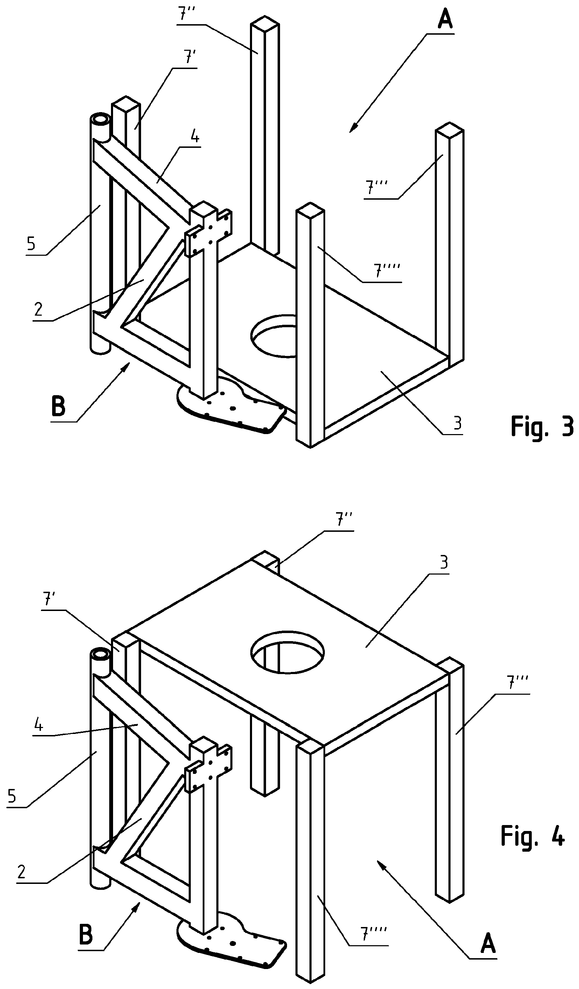

Module B includes a functional block 2, also called rotating modular structure 2 according to a fixed vertical axis 5, between two predetermined angular positions, and carries solidly bound an organ or elevation system 6 for the elevation of the means inherent to the sensors 8. On this modular structure is hinged an arm 4 that performs the actual rotation movement. The movements of the structural components, included respectively in modules A and B, are alternative and mutually conditioned, this means that the rotating modular structure 2, which rotates transversely to the XY plane, is prevented from moving until the sliding platform 3, of the lift system 1, which translates in the direction of height Z, is in the position of shelter and transport, as shown in Figures 3, 4, 5.

The actual operation of the apparatus involves a series of operational phases.

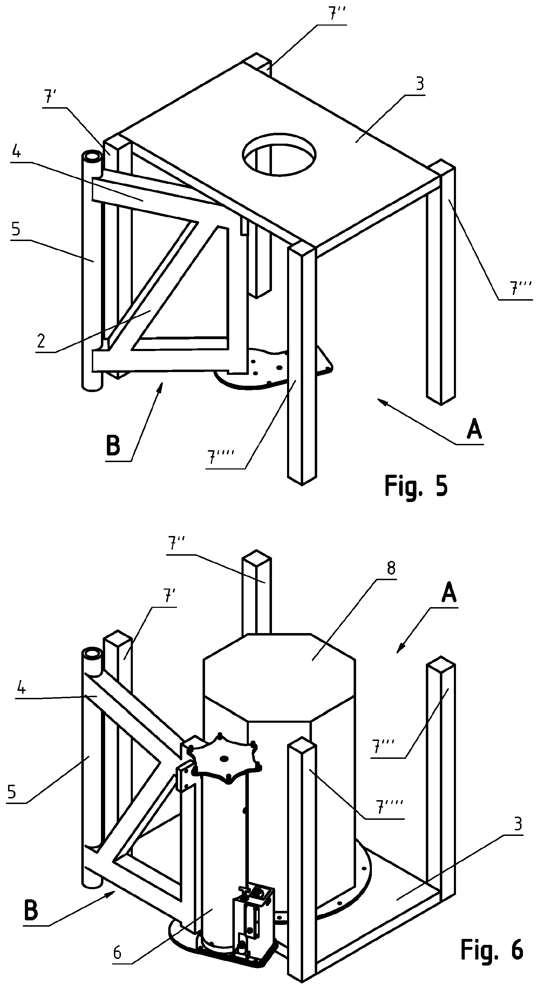

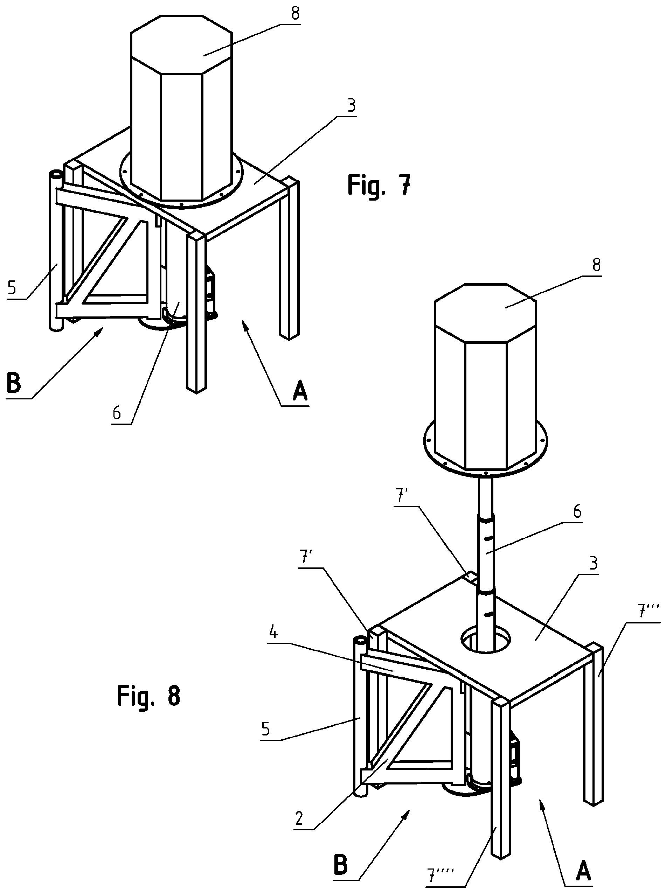

The first step consists in operating and lifting the A module carrying the 8 sensor means by means of the vertical translation platform 3 which, guided by the columns 7', 7", 7"', 7', moves upwards until it reaches the extreme upper stroke and consequently freeing the volume previously occupied, as shown in Figures 6 and 7. It is highlighted in them that the lifting of the vertical translation platform 3 corresponds for the rotational module B the possibility of rotating, transversely to the XY plane, together with arm 4 and organ 6 also called system.

In other words, once the vertical translation platform 3 has been raised, in the direction of the height Z, and the space below has been freed, the rotating modular structure 2 can be operated (in the transverse direction to the XY plane), arranged on the side of the same vertical translation platform 3. The pivoting arm 4 on the fixed axis 5, reaches the extreme allowed stroke that sees it centered with respect to the axis of the sensor block 8. In essence, with platform 3 raised, the rotating modular structure 2 is placed just below the vertically translated platform 3. The telescopic elevation system (mast) 6, integral with the modular rotational structure 2, takes charge of the means inherent in the sensor block 8 arranged on the vertical translation platform 3 to proceed with the final elevation.

Module C is configured as a device designed to exchange the constraints that fix the means sensors 8 to the vertical translation platform 3, transferring the fixing constraints to another support, in particular to the telescopic lifting system 6.

This C module dedicated to the switching of constraints, is fixed to the lower base of the sensor blocki 8 and is found alternately, between the vertical translation platform 3 of base support and the top flange of mast 6. The drive of module C can be manual or motorized and must meet the fundamental requirement of never releasing the sensor block 8 free with respect to the vertical travel platform 3 or mast 6. This means that sensor block 8 must first be bound to mast 6 and only then be released from the vertical translation platform 3 and vice versa, so that the fixing constraints of the sensor blocki 8 are never missing.

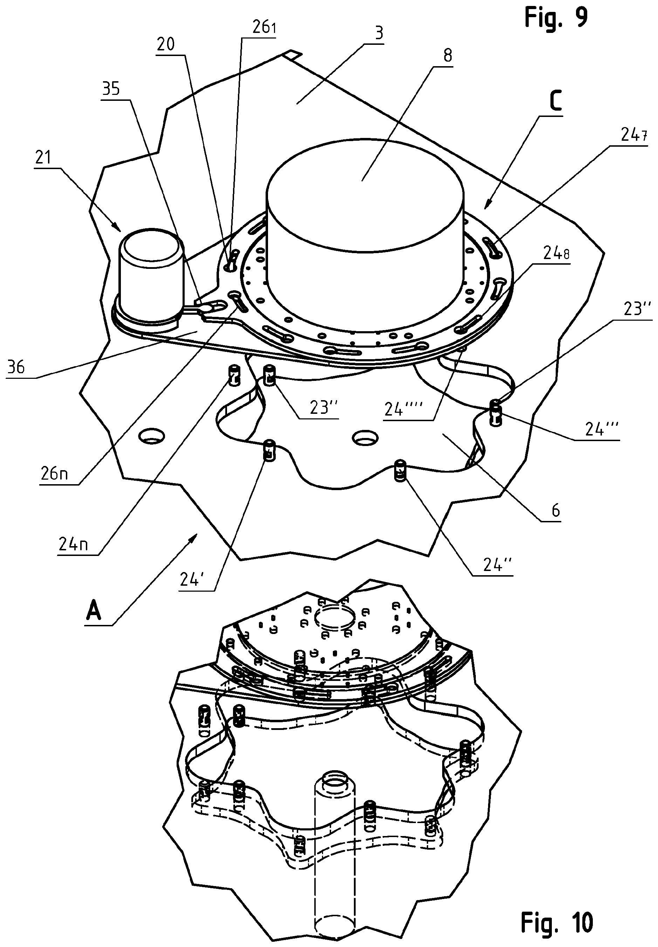

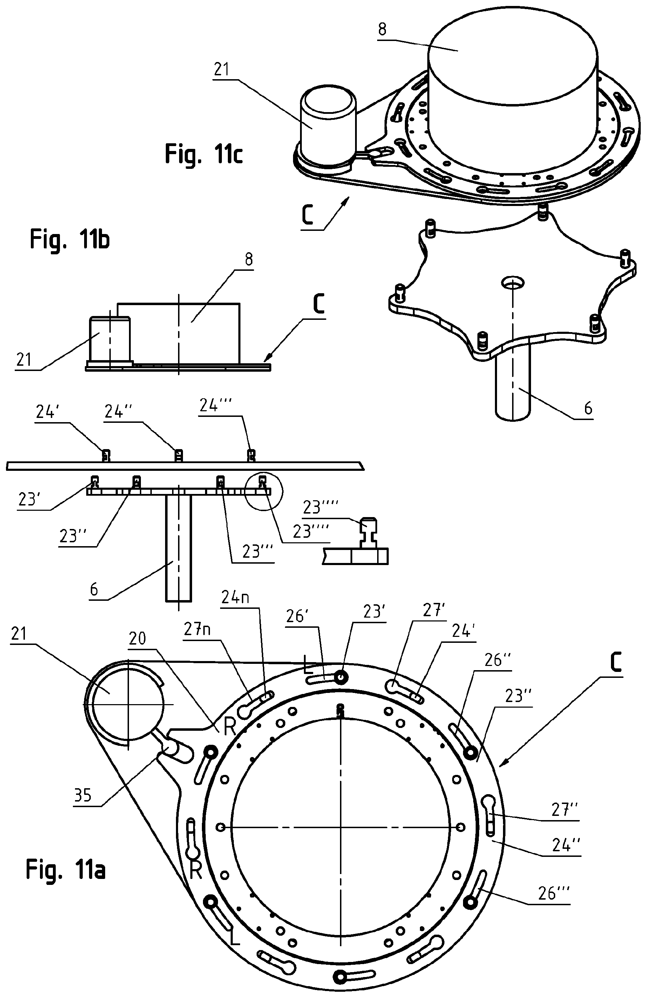

As shown in Figures 9, 10, 11 in a preferred embodiment the constraint switching module consists of a ring 20 with a typical circular crown shape that operates as a constraint exchange disk. This disc is operated together with flange 30, forming the base of the sensor block, by a motorized device 21, integral to the support plane, for a pivoting movement around the axis of the motorized drive 21, through the switching rod 35.

This pivot movement, of rotation, limited to a predetermined angular opening, is configured so that the support pins can be inserted/disarmed and 23', 23",... 23^{N} and 24 ', 24",.... 24^{N}, respectively, which allow to initially fix the sensor block 8 on the vertical translation platform 3, and then, to replace the fixing constraints on another support, integral with the mast 6 column for the raising of the sensor block 8. It is again appropriate to draw attention to the fundamental principle of transfer relating to an automated system consisting essentially of parts that interact and move according to pre-established and automatic kinematic principles in order to present the various operating component parts in front of the various operating units that must accommodate them and that also intervene automatically. In fact, to perform this constraining switching operation, the ring 20 is configured with a series of holes 26', 26".... 26^{N}, and 27', 27",... 27^{N} arranged circumferentially along the median circumference of the circular crown with which the same ring 20 is conformed.

As shown in Figures 9 and 10, the 26', 26" punctures.... 26^{N}, and 27', 27",... 27^{N} obtained in the ring nut, circumferentially, are configured:
a- with a linear section L with a reduced width (opening) such as to constitute a guide groove for the 23', 23",... 23^{N}, and 24', 24", 24^{N} inserted therein, each in a relative drilling, and
b- with an R section configured as a hollow cylinder with a base diameter greater than the width of the linear section L, corresponding to the position of (dis) insertion of the pins 23', 23",... 23^{N}, and 24', 24",.... 24^{N} which are positioned in the ring nut 20 at instant t, in the section configured with a hollow cylinder.

It is evident from Figure 10 that the two types of punctures 26', 26".... 26^{N}, and 27', 27", 27 N alternate in the circumferential path, presenting the circular section of each drilling 26', 26" ....26 ^{N} directly opposed, frontally, to the circular section of each drill 27', 27", ... 27^{N} next/antecedent and the linear section of each drill 26', 26".... 26^{N} directly opposite, in front of the straight section of each puncture 27', 27",... 27^{N} next/antecedent.

The support pins 23', 23",... 23^{N} and 24 ', 24", .... 24^{N} also have a specific configuration as shown in Figure 9. In particular, the basic cylindrical configuration of the pin 23', 23",... 23^{N}, and 24', 24",.... 24^{N} is in fact, cut/grooved at half height obtaining two sections that give the pin a pair of parallel planes on the two opposite sides of the pin, so that in the middle part of each pin it appears, as a sort of imaginary parallelepiped, with two flat faces and two rounded faces. The two flat median profiles of the pins 23', 23",... 23^{N} and 24', 24",.... 24^{N} allow them to translate linearly into the drilling in which they are inserted when the angular rotation of the ring nut 20 is performed. Instead, the sections at the end of each pin maintain the cylindrical configuration necessary for coupling with clearance, with the circular R sections of the 26', 26" holes.... 26^{N}, and 27', 27",... 27^{N}, of the ring 20, for the possible release of the different sets of pins.

From another point of view it is evident that the cylindrical reliefs both upper and lower of each pin constitute leafs, which allow to maintain the pins 23 ', 23 ",... 23^{N}, and 24', 24",.... 24^{N} integral respectively to the corresponding drilling 26, 27, in the path of crossing the linear section L for guided translation in the groove of the drilling 26', 26".... 26^{N}, 27', 27",... 27^{N}. In addition, each pin 23, 24 is able to come out/insert from/into the ring nut 20 when it is centered at the circular section R of the drilling 26', 26 ".... 26^{N}, and 27', 27",... 27^{N}. In the execution of the dis/coupling of the support planes related to platform 3 or to the top flange of mast 6, in practice only one of the two sets of pins respectively 23', 23" is disengaged/inserted,... 23^{N}, or 24', 24",.... 24^{N}. In a different construction, the holes on the median perimeter of the ring nut 20 are symmetrical and have two circular holes R at the end ends of the drilling itself. The actual constraining switching process consists of three distinct phases:
a. Step 1 Module C is in the position where it constrains sensor block 8 to vertical travel platform 3. Pins 24 are inserted and pins 23 are disarmed.
b. Step 2 Module C rotates and constrains sensor block 8 to vertical translation platform 3 and mast 6 top flange simultaneously. In this condition both pins 23 and pins 24 are inserted, the vertical translation platform 3 and mast 6 are bound to each other and any relative movement is impossible.
c. Step 3 module C rotates again and constrains sensor block 8 to the top flange of mast 6, simultaneously releasing the constraint with the vertical translation platform 3 (pins 23 are inserted and pin 24 is disengaged). At this point the sensor block is firmly attached to mast 6 and released from the vertical translation platform 3, so mast 6 can rise up to maximum elevation.

Module C has the task of exchanging the constraints of the sensor means 8, from the vertical translation platform 3 to mast 6, to allow the latter to continue up to its maximum elevation.

The exchange takes place when:
1. the vertical travel platform 3 brought sensor block 8 to the maximum height allowed for it;
2. the mast 6 rotates, goes to collimarsi centered, under the same sensor block 8 and begins to rise up to touch the lower base of module C;
3. the telescopic mast 6 begins the upward stroke until the top flange comes into contact with the lower base of module C, at which point it stops to allow module C to exchange constraints between vertical translation platform 3 and top flange of mast 6.

Although not indicated in the figures, it is evident that the constraint exchange phase allows the raising of the sensor means in the operating position, either manually screwing/unscrewing bolts, or by means of a simplified manual or motorized device, as well as through the alternative of an automatic drive to be operated remotely.

In summary, we start from two modules A and B, side by side, to get to the same two modules A and B arranged overlapping and through the use of module C, which allows you to switch the anchoring constraints of the sensor block i 8, you reach the final operating condition that involves raising the mast/telescopic tower with the relative sensor block.

In the introduction, it was highlighted that the vertical translation platform 3, translating in the direction of the height Z, guided in module A is designed for the transport of means of sensors 8, while the rotating modular structure 2, which rotates transversely to the XY plane, is designed for the transport of towers or telescopic masts 6. The means related to sensor 8 were then positioned above the mast 6 elevation mechanism. Before the operation of the latter, by means of module C, the means sensors 8 are bound to the tower/telescopic mast 6 and immediately after the constraints are removed sensor block/platform 3, only at this point we proceed to raise the tower/ telescopic mast 6 to bring the half sensors 8 in their working position.

During the storage and transport of the shelter (with vehicles equipped for the handling of Containers/shelters) structures 1 and 2, will be in the shelter position, i.e. the lift module 1, next to the rotating module 2, while platform 3 will be in turn in a position of minimum distance from the floor of the shelter.

Once the location has been identified, the truck is unloaded, the shelter is positioned and the necessary services are implemented.

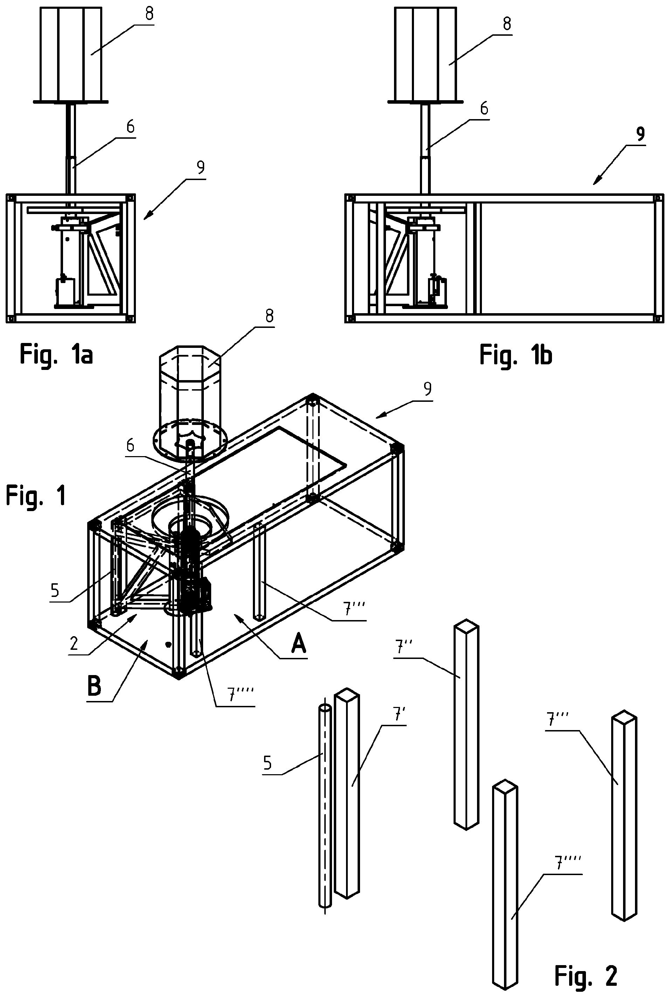

For the activation of the detection system, the following phases are foreseen in the field:
- Lift platform 3 with its sensor means 8 up to the maximum height reachable by it inside the shelter, as shown in Figures 6 and 7 relating respectively to the condition of shelter and transport (Figure 6) and to the lifting of the lift system 1 and platform 3 (Figure 7).
- Once the platform 3 has been completely lifted as shown in Figure 7, the underlying volume has been freed and the rotating structural module 2 is rotated, occupying the space/volume made available. The rotation angle of the pivoting arm 4 is strictly predetermined to place precisely centered under the vertical of platform 3 and the associated sensor means 8, the mast 6 raising system placed in the rotating modular structure 2, which supports a truss, or a telescopic mast, or any other custom commercial raising system.
- The next step is to raise the mast 6 telescopic tower until its top flange comes into contact with the lower flange of the means associated with the sensor means 8 bound to platform 3.
- At this point, by means of the switching module C, the top flange of mast 6 is constrained with the lower flange of the means inherent to sensor 8, in this condition the means inherent to the sensor means 8 are simultaneously bound to both platform 3 and to the elevation mast 6.
- In order to proceed with the raising of tower 6, the constraints that bind the means sensors 8 to platform 3 are removed.
- Once the means inherent to the sensors 8 are firmly fixed/bound to mast 6 and freed from the constraints that bound them to platform 3 we proceed to the last step, the raising of the tower/mast 6 that brings the means related to the means sensors 8 in operational position as shown in Figures 1 and 8 that show a complete elevation of the telescopic tower/mast 6.

The description for simplicity was performed on a device composed of two modules A and B side by side and collaborating with each other. It is useful to note that depending on the type of sensor means to be installed, these can be, as well as side by side, also partially interpenetrated to optimize the available space.

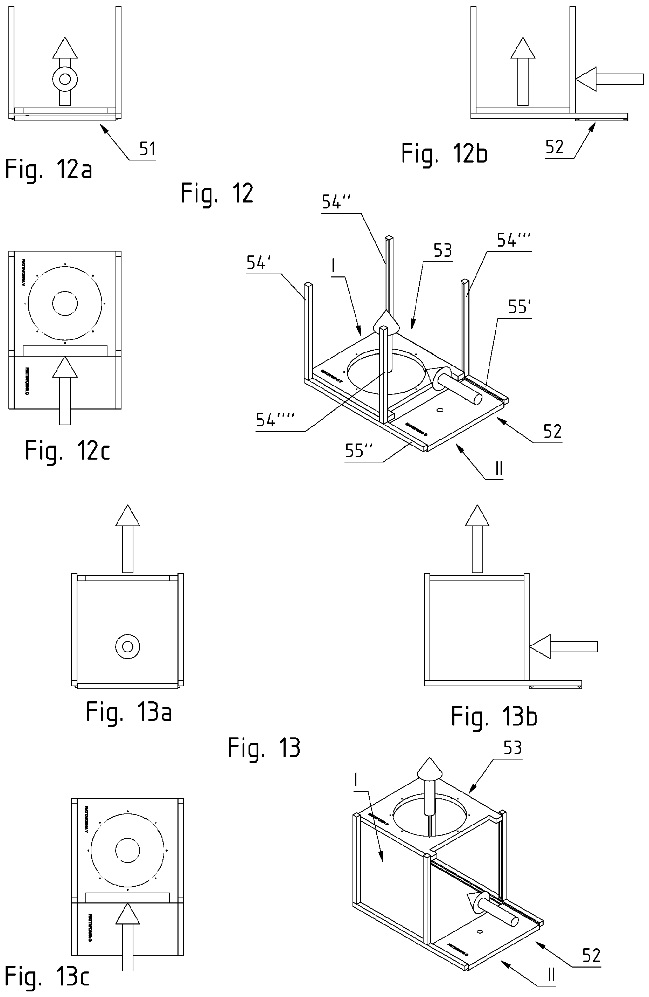

In a different embodiment of the principle according to the present invention the mechanism illustrated in Figures 12 to 19 consists of two modules side by side, henceforth module I, and module II; module I is able to perform only vertical translational movements while the second module II is able to translate only horizontally. Both modules I and II have sliding platforms: on platform 53, in module I vertically translating, (in the direction of height Z), the sensor means 56 to be brought into operational position are constrained, while on platform 52, in module II with horizontal scrolling, (in the horizontal longitudinal direction X), organ 57 is constrained for the elevation of the sensor means 56.

In other words, module I, vertically translating, uses a platform 53 with only vertical scrolling, in the direction of height Z, with guidance on columns 54', 54", 54‴, 54‴, also vertical. Movement is limited between two extreme vertical positions. Module II, moving horizontally, according to the longitudinal direction X, uses a platform with horizontal sliding only, in the longitudinal direction X, on side tracks 55', 55". Movement will be limited between two extreme horizontal positions. The movements of Platforms 53 and 52, included respectively in modules I and II, are alternative and mutually conditional, this means that the horizontal platform 52, which translates in the longitudinal direction X, is prevented from moving until the vertical translation platform 53, which translates in the direction of height Z, is in the position of shelter and transport, as shown in Figures 12, 12a, 12b, 12c.

The next step is to operate and lift module I by means of the vertical translation platform 53, which guided by Columns 54', 54", 54"', 54', moves upwards until it reaches the extreme upper stroke and consequently freeing the volume previously occupied as per Figures 13, 13a, 13b, 13c. It is highlighted in them how the lifting of the vertical translation platform 53 corresponds to the possibility of moving horizontally by Platform 52.

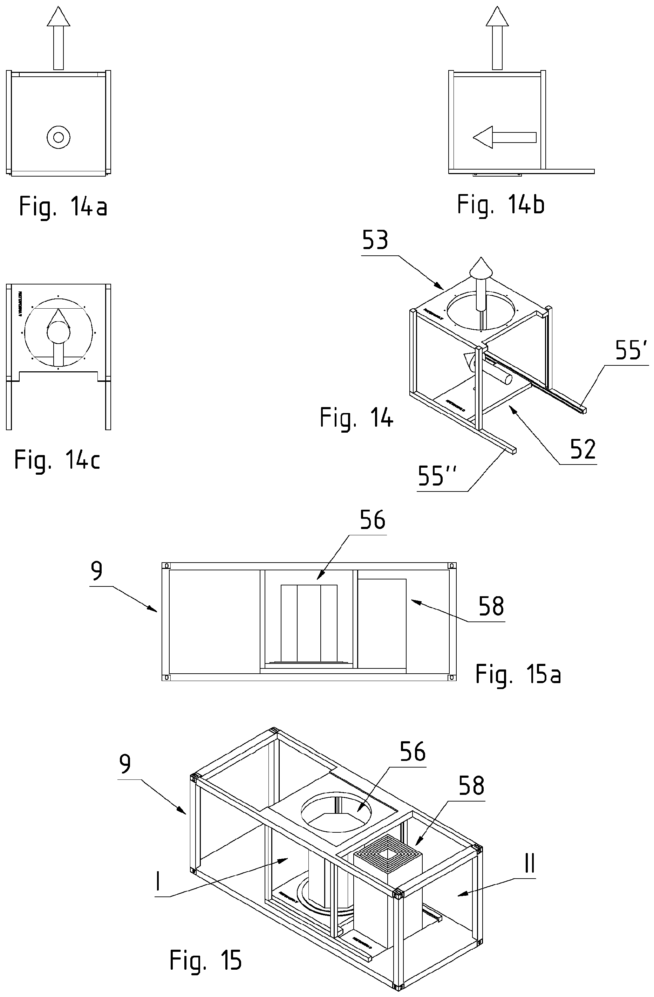

In other words, raised the platform with vertical translation 53, in the direction of the height Z, and freed the space below you can proceed to the operation of the horizontally moving platform 52, (in the longitudinal direction X), arranged to the side of the platform with vertical translation 53, this, sliding guided on Tracks 55', 55 ", will reach the extreme stroke allowed that will see it occupy the space freed as shown in Figure 14, 14a, 14b, 14c. In essence, with the vertical translation platform 53 raised, the horizontal platform 52 is placed just below the vertical translation platform 53. The telescopic elevation system 57 - integral with the horizontal platform 52 - takes charge of the means related to the sensors 56 resident on the vertical translation platform to proceed with the final elevation.

In summary, we start from two modules I and II, side by side, to get to the same two overlapping modules I and II. In the introduction, it was highlighted that the vertical translation platform 53, translating in the direction of height Z, guided in module I is designed for the transport of sensor means 56, while the horizontal platform 52, translating in the longitudinal direction X, guided with module II is designed for the transport of towers or telescopic masts 58. The means related to sensor 56 were then positioned above the elevation mechanism 57. Before the operation of the latter, the means sensors 56 are bound to the tower/telescopic mast 58 and immediately after the constraints are removed means sensors 56/platform 53, only now we proceed to raise the tower/telescopic mast 58 to bring the means inherent to the sensors 56 in their working position.

As shown in Figures 15 and 15a during the storage and transport of shelter 51 (with vehicles equipped for handling Containers/shelters) platforms 52 and 53 will be in the shelter position, i.e. platform 52, next to platform 53, while platform 53 will be in the position of minimum distance from the decking of shelter 51.

Once the location has been identified, the truck is unloaded, shelter 51 is positioned and the necessary services are implemented.

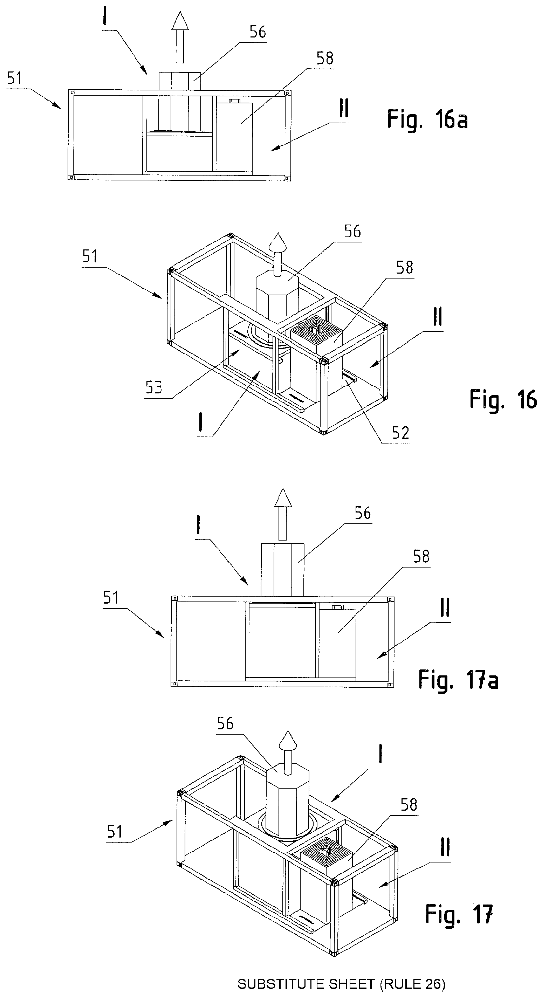

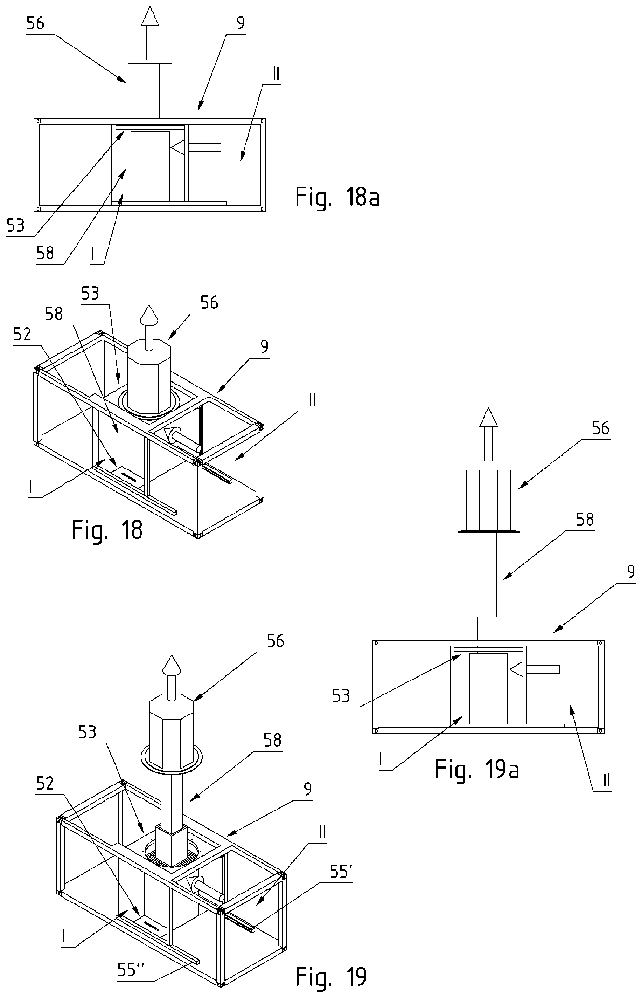

For the activation of the detection system, the following phases are foreseen in the field:
- Lift platform 53 with its sensor means 56 to the maximum height achievable by it inside shelter 51, as shown in Figures 15 and 16 relating respectively to the condition of shelter and transport (Figure 15) and the partial lifting of platform 53 (Figure 16).
- Once the platform 53 has been completely lifted as evidenced by Figures 17, 17a and 18, 18a, the underlying volume is freed, and the platform 52 is moved laterally, occupying the space/volume made available, and placing under the vertical of platform 53 and the associated sensor means 56, the elevation system placed on platform 52, such as a truss, a telescopic mast, or any other custom commercial 57 raising system.
- The next step is to raise the Telescopic Tower 58 until its top flange f comes into contact with the lower flange f of the means associated with the means 56 bound to platform 53.
- Now the top flange f of the truss 58 is constrained with the lower flange f' of the means inherent to the sensor 56, at this point the means inherent to the sensors 56 are simultaneously bound to both platform 53 and the elevation pylon 58.
- In order to proceed with the raising of tower 58, the constraints that bind the means sensors 56 to platform 53 are removed.
- Once the means inherent to the sensors 56 are firmly fixed/bound to Tower 58 and freed of the constraints that bound them to platform 53 we proceed to the last step, the raising of tower 58 that brings the means sensors 56 in operational position as shown in Figures 19 and 19a that show only a partial elevation of the telescopic tower.

The description for simplicity has been performed on a device composed of two modules I and II side by side and collaborating with each other, remains fundamentally identical the function of the switching module C that in this configuration interworks with the two modules I, II for the exchange of constraints, through the commitment - the disengagement- of flanges f, f'.

It is important to note that depending on the type of components positioned on the first and second modules, these can be, as well as side by side, even partially interpenetrated to optimize the available space.

### Advantages and industriality of the invention

The advantages inherent in the deployment of the equipment are evident, an extremely delicate phase as a series of operations must be carried out in strict sequence and without the possibility of errors to ensure the safety of the operators/ employees.

The system described and the relative installation process, moreover, means that the means inherent to the sensors, when sheltered and during transport, reside in the structure in the same position that they will assume when they are operational. On the other hand it is a fundamental requirement of a transportable modular system for the elevation of sensor means systems, the rigidity of the position of the sensor means themselves, when operational. This requires, in its use, a high rigidity of the working position. The proposed system, allowing the use of large lifting columns, allows to obtain rigidity results otherwise not achievable. In addition, the advantages deriving from the scope of these means of detection and/or transceiver are obvious. In fact, the range improves as the height of the telescopic support tower increases, as the height of the means related to the means of sensors increases, the obstacles that stand in the way of the detection activity can be easily overcome. The detection activity of the sensor system overlaps with any type of obstacle such as buildings or trees or a relief of the territory or in any case natural or artificial obstacles. The height of the nested telescopic mast and the operating height deployed by it are optimal operating parameters for the sensor positioning system according to the invention. It is in fact essential that a useful system is provided that operates with a minimum height in conditions of nesting of the telescopic mast and vice versa with the maximum operating height deployed or full extension. The arrangement of the module is such as to allow the advantage that the platform passes from a level of minimum distance from the floor of the shelter, to a level of minimum distance from the ceiling of the shelter.

As far as the industriality of the invention is concerned, the characteristics of modularity and complementarity of the three sections A, B and C included in the shelter are extremely evident.

The structure according to the found consists of three modules A, B, C side by side and cooperating with each other, the first that we would also define "MV module" or vertical translation module in the direction of the Z axis, the second that we would define "RO module" or rotational module, transversely to the horizontal plane XY, the third module is called constrained switching block and is configured as a device designed to exchange the constraints that fix the sensor block to the support/platform with vertical translation etc., transferring the fixing constraints to another support, in particular integral to the column/mast of lifting of the telescopic tower.

This component C module dedicated to the switching of constraints, is fixed to the lower base of the sensori block and is located alternately, between the vertical translation platform of base support and the top flange of the telescopic tower. The vertical/horizontal interworking in the shift, respectively, translation/rotary of the two modules A and B provides an optimal level of complementarity, prevention and elimination of any faults and possible inappropriate interaction between module A and module B, with the relative equipment and devices included in them. In fact, the movement of modules 1 and 2 is controlled automatically, by safety interlocks designed to prevent relative movements performed prematurely and that can cause collisions between them.

It should be noted here again that module A is composed of a platform 3 that slides vertically on two or more guide columns 7', 7", .... 7^{no}. These columns have moving devices for lifting/descending platform 3. Module B is composed of a rotating structure 2 that moves so that arm 4 goes to place the telescopic tower 6 precisely in the center of platform 3, with the integral means sensors 8, colliding the axis of the telescopic mast/mast 6 with the axis of the sensor section 8.

The interfacing on the inner side of module B is such as to allow the rotating structure 2 to pass from a lateral position flanked by module A, to an underlying position and centered with respect to platform 3, only when it will be in the position of maximum elevation. The third section C is configured as a device designed to exchange the constraints that fix the sensor block 8 to the support/platform with vertical translation etc., transferring the fixing constraints to another support, in particular integral to the mast/telescopic tower 6 mast lifting. This component C module dedicated to the switching of constraints, is fixed to the lower base of the sensorblock i and is found alternately, between the vertical translation platform of base support and the top flange of the telescopic tower 6.

The drive of module C can be manual or motorized and must meet the fundamental requirement of never releasing the component on which it is operating for the exchange of constraints.

The structure according to the find, described in the second embodiment, consists of two modules I, II side by side and cooperating with each other, the first that we would also define "module V" or module with vertical translation -in the direction of the axis Z-, and the second that we would define "module O" or module with horizontal translation, in the longitudinal direction X. The horizontal/vertical interworking in the translational movement of the two modules I and II provides an optimal level of complementarity, prevention and elimination of any faults and possible inappropriate interaction between modules I and module II with the relative equipment and devices included in them. In fact, the movement of platforms 52 and 53 is conditioned by safety interlocks designed to prevent relative movements carried out prematurely and that could cause collisions between them.

It should be noted again here that module I is composed of a platform 53 that slides vertically on two or more guide columns 54', 54",.... 54n. These columns have handling devices for lifting/descending platform 53. Module II consists of a platform 52 that slides on two horizontal guides 55', 55". The interfacing on the inner side of module II is such as to allow platform 52 to move from a lateral position flanked by module I, to a coincident position below platform 53, only when it is in the position of maximum elevation.

Modules A, B, and C (I and II) have commercial transmission components, such as hydraulic pistons, chains, drive screws, motors, gearboxes etc., supported by the arrangement of strain gauges and/or optical and/or electromagnetic means of sensors for detecting the absence/ presence of the adjacent module, to ensure that a decision-making process is implemented that, respectively, activates or deactivates the movement of the blocks conditioned by safety interlocks designed to prevent relative movements carried out prematurely and which may cause collisions between them.

Moreover, the movements mentioned are carried out with the assistance of electric motors to speed up and lighten the maneuvers, but can also be performed manually if a problem with the supply of electricity prevents sheltering.

## Claims

1. Modular system for the shelter, transport, positioning and elevation of sensor means **characterized by** the fact of including a first module (A) and a second module (B) side by side and cooperating with each other, and a third module (C) of interfacing responsible for the constraining switching of functional blocks included in the first and/or second module, the first module (A) operating with a lift system (1) with vertical translation, according to the direction of height (Z), and the second module (B) operating with a rotating structure (2) capable of rotating transversely to the plane (XY), in which the first module (A) includes:
i- a platform (3) with vertical translation in the direction of height (Z), between two extreme boundary positions;
ii- columns with guide channels ( 7', 7", .... 7⁽ⁿ) in the path that the platform (3) is capable of following when actuated to translate vertically in the height direction (Z);
iii- sensor means (8) responsible for the detection of environmental physical quantities;
iv- blocking means (24) which secure the sensor means (8) integral to the platform (3), both in conditions of sheltering and during the translational movement of the platform upwards or downwards;
the second module (B) in turn comprises:
a- a rotating structure (2)/arm (4) pivoting bound to a fixed axis (5) around which it can only rotate transversely to the horizontal plane (XY) between two predefined angles, one of OFF corresponding to the rest position and the other of ON being strictly predetermined because the arm (4) goes to place the mast (6) precisely at the center of the vertical translation platform (3) with the integral sensor means (8), colliding the axis of a telescopic tower (mast) (6) with the axis of the sensor means (8);
b- a telescopic pole/mast (6) extendable to bring the sensor means (8) to maximum elevation under sensing conditions;
c- means of elevating the telescopic tower (mast) (6);
d- means of locking and sealing (23) of the sensor means (8) integral with the telescopic tower (6), under the conditions of elevation of the telescopic tower (6) itself;
the third module (C) responsible for constraining is suitable for the exchange of the constraints that fix the sensor means (8) to the vertical translation platform (3), transferring the constraining action of fixing to another support integral to the telescopic tower / mast (6) of lifting the sensor means (8), called module (C) dedicated to the switching of constraints, coming to arrange the constraints (23, 24), in the use of the apparatus, or interconnected with the vertical translation platform of base support (3) or with the top flange of the telescopic tower (6) depending on whether the detection apparatus, respectively, is in rest or operating conditions.

2. Modular system according to claim 1 **characterized by** the fact that the two constituent modules (A, B) have transmission components such as hydraulic pistons, chains, drive screws, motors, gearboxes supported by the arrangement of strain gauges and/or optical and/or electromagnetic detectors, for detecting the absence/presence of the first module (A) adjacent to the second module (B), to ensure that a decision-making process is carried out which, respectively, activates or maintains deactivated the rotational motion functions of the rotating modular structure (2) constrained by safety interlocks designed to prevent relative movements performed prematurely and which may cause collisions between the modules themselves (A, B).

3. Modular system according to claim 1 and claim 2 **characterized by** the fact that the two constituent modules (A, B), have transmission components such as hydraulic pistons, chains, drive screws, motors, gearboxes supported by the arrangement of strain gauges and / or optical and / or electromagnetic detectors, for the detection of the absence / presence of the second module (B) underlying the first module (A), to ensure that a decision-making process is implemented which, respectively, activates or keeps deactivated the translational movement functions of the lift system (1) bound by safety interlocks designed to prevent relative movements performed prematurely and that may cause collisions between the modules themselves (A, B).

4. Transportable modular system according to the above claims **characterized by** the fact that the switching module (C) constraints capable of exchanging the constraints securing the sensor block (8) to the vertical travel platform (3) by transferring the fixing constraints to the support integral to the lifting column/mast (6), and vice versa, consists of a ring nut (20), conformed to a circular crown, which operates as a constraint exchange disc, called disc being driven by a motorized device (21), integral to the support plane, for a pivoting movement around the axis of the motorized drive (21), through the switching rod (35), called pivot movement, of rotation, limited to a predetermined angular opening, being configured so that the insertion / disengagement of the support and locking pins is carried out (23', 23",... 23 ^{N} and 24', 24", ...... 24^{N}), respectively, which allow to initially fix the sensor block (8) to a given support on the vertical translation platform (3), and then, to replace the fixing constraints on the top flange, integral to the mast column (6) telescopic for raising the sensor block (8), the ring nut (20) being configured with a series of holes (26', 26".... 26^{N}, and 27', 27",....27^{N}) arranged along the median circumference of the circular crown with which the same ring is shaped (20), which have:
a- a linear section ( L) with a small opening width such as to constitute a guide groove for the support pins (23', 23",... 23^{N}, and 24', 24",....24^{N}) inserted therein, each in a relative drilling;
b- a section (R) configured as a hollow cylinder, with a base diameter greater than the width of the linear section (L), corresponding to the position of (dis) insertion of the pins (23', 23",... 23^{N,e} 24', 24",.... 24^{N}) which are positioned in the ring nut (20) at a given time, in the section configured with a hollow cylinder.

5. Modular system according to the previous claims **characterized by** the fact that the basic cylindrical configuration of each pin (23', 23",... 23^{N}, and 24', 24",.... 24^{N}) is cut/grooved at half height obtaining two sections that give the pin a pair of parallel planes on the two opposite sides of the pin, so that each pin, in the middle part, has two flat faces and two rounded faces, the two flat median profiles of the pins (23', 23",... 23^{N} and 24 ', 24",.... 24^{N}) being suitable for the linear translation of the pin in the drilling in which it is inserted when the angular rotation of the ring nut is performed (20), the sections at the ends, lower and upper, of each pin maintaining the cylindrical configuration necessary for coupling with clearance, with the circular sections (R) of the holes (26', 26".... 26^{N}, and 27', 27", .... 27 ^{N}) of the ring nut (20), for the possible escape of the different sets of pins, the cylindrical reliefs - both upper and lower - of each pin, being suitable to ensure that each pin (23', 23",... 23^{N}, and 24', 24",.... 24N) and solidary, respectively, to the puncture (26', 26".... 26N, e 27', 27",... 27N) corresponding, both in condition of blocking the means of sensors (8) to the relative platform, and in the path of crossing the linear section (L) for guided translation in the groove of the drilling (26', 26".... 26N 27 ', 27", .... 27N), each set of pins (23, 24) being, instead, able to come out / insert from / into the ring (20) when they are centered at the circular section (R) of the drilling (26', 26 ".... 26N, and 27', 27", .... 27N).

6. Modular system according to the previous claims **characterized by** the fact that the sensor means (8), when sheltered and during transport, reside in the container structure (9) in the same position they assume when they are operational in detection conditions, both the translation of the platform (3) in the guide columns (7', 7", .... 7ⁿ) is the raising / lowering, with the telescopic tower (6) taking place through isometric displacements of the component parts of the first module (A) able to translate vertically.

7. Modular system according to the previous claims **characterized by** the fact that the sizing and arrangement of module (A) with vertical translation is such that the platform (3) contained therein can be translated with a stroke that varies between a first level of minimum distance from the walking surface of the outer container, to a second level of minimum distance from the ceiling of the outer container.

8. Modular system according to the previous claims **characterized by** the fact that in the structure responsible for the containment of the sensor means (8) there are additional complementary equipment necessary for the operation of the sensor means themselves (8) such as electronic instrumentation, computers, air conditioners of the operating environment, electric generators, radio links.

9. Method for activating a detection system using a modular system according to claims 1 to 8 **characterized by** the fact that it includes the following steps:
i- lift the vertical translation platform (3) with relative means of sensors (8) to the maximum height reachable by it inside the outer container (9);
ii- once the vertical translation platform (3) has been lifted, the underlying volume having been released, proceed to rotate, transversely to the horizontal plane (XY), the rotating modular structure (2) which occupies the space/volume, made available, by placing under the vertical of the platform (3) and the associated sensor means (8), the system of elevation integral to the rotating modular structure (2), with its telescopic tower (6), the angle of rotation of the pivoting arm (4) being strictly predetermined because it goes to place the telescopic tower mast (6), corresponding precisely to the center of the platform (3) with the sensor means (8) solid, collimate the axis of the telescopic tower mast (6) with the axis of the sensor means (8);
iii- raise the telescopic tower (6) until its top flange comes into contact with the lower flange of the switching module (C) stopping to allow the module (C) to exchange constraints between the vertical translation platform (3) and the top flange of the mast (6);
iv- perform the switching between the constraints integral to the base platform (3) and the constraints on the top flange of the telescopic tower (6), the process of commutation constraint itself composing, in turn, three distinct phases:
iv-a- the switching module (C) is located in the position where it constrains the sensor block (8) to the vertical travel platform (3);
iv-b- the switching module (C) rotates and constrains the sensor block (8) to the vertical translation platform (3) and to the top flange of the mast (6), simultaneously, in this condition the vertical translation platform (3) and the mast (6) being constrained to each other and being impossible any relative movement;
iv-c- the switching module (C) rotates again and binds the sensor means (8) to the top flange of the mast (6), simultaneously freeing the constraint from the vertical translation platform (3), at this point the sensor means (8) being firmly bound to the mast (6) and released from the vertical translation platform (3);
v- once the sensor means (8) are firmly fixed / bound to the mast telescopic tower (6), raise the telescopic tower (6) which brings the sensor means (8) into operational position.

10. Transportable modular system for the shelter, transport and elevation of sensor means operating in mobility **characterized by** the fact of including a first module (I) and a second module (II) side by side and cooperating with each other, the first module (I) operating as a functional block with vertical translation, according to the direction of the height (Z) of the container structure (51), and the second module (II) operating as a functional block with horizontal translation, in the longitudinal direction (X) of the container structure (51) and in which the first module (I) includes in turn:
i- a platform (53) with vertical translation in the direction of the height (Z) of the container structure (51), between two extreme boundary positions (59, 59');
ii- columns with guide channels ( 54', 54", .... 54⁽ⁿ) of the path that the platform (53) is able to follow when actuated to translate vertically in the height direction (Z);
iii- sensor means responsible for the detection of environmental physical quantities;
iv- flange stop means that block the sensor media integral to the platform (53), both in conditions of shelter and during the translational movement of the platform upwards or downwards;
and the second module (II) includes in turn:
a- a platform (52) with horizontal translation in the longitudinal direction (X) of the container structure, between two predefined boundary positions (60, 60');
b- the guide channels (55', 55") in the path that the platform (52) is able to follow, when it is operated forward or backward;
c- a mast/ telescopic tower (58) extendable to bring the sensor block to maximum elevation under sensing conditions;
d- means of elevating (57) the telescopic tower (58);
e- means of stopping with locking flanges and sealing of the sensor block integral to the telescopic tower (58), in the conditions of elevation of the telescopic tower (58) itself-.

11. Modular system according to claim 10 **characterized by** the fact that the two constituent modules (I, II), have transmission components such as hydraulic pistons, chains, drive screws, motors, gearboxes supported by the arrangement of strain gauges and / or optical and / or electromagnetic detectors, for detecting the absence / presence of the first module (I) adjacent to the second module (II), to ensure that a decision-making process is implemented which, respectively, activates or keeps deactivated the horizontal translation of the platform (52) constrained by safety interlocks designed to prevent relative movements carried out prematurely and that may cause collisions between the modules themselves (I, II).

12. Method for activating a detection system using a modular system according to claim 10 **characterized by** the fact that it includes the following steps:
- lift the platform (53) with relative means of sensors up to the maximum height reachable by the platform inside the container (51);
- once the platform (53) has been raised, having freed the underlying volume, proceed to the lateral movement of the platform (52) which occupies the space/volume, made available, placing under the vertical of the platform (53) and the associated means of sensors (56), the raising system (57) placed on the platform (52), with its telescopic tower (58);
- raise the mast telescopic tower (58) until its top flange comes into contact with the lower flange of the sensor means attached to the platform (53);
- constrain the top flange (f) of the telescopic tower (58) with the lower flange (f') of the sensor means, the sensor means resulting in such conditions, at the same time, bound both to the platform (53) and to the telescopic elevation tower (58);
- disengage the constraints that bind the sensor means (56) to the platform (53) to proceed with the raising of the mast telescopic tower (58);
- once the sensor means are firmly fixed / bound to the mast (58) and freed from the constraints that bound them to the platform (53), raise the telescopic tower (58) that brings the sensor means into operational position.

## Patentansprüche

1. Modulares System für den Schutz, Transport, die Positionierung und Elevation von Sensormitteln, **gekennzeichnet durch** die Tatsache, dass es ein erstes Modul (A) und ein zweites Modul (B) nebeneinander und miteinander zusammenwirkend sowie ein drittes Schnittstellenmodul (C) einschließt, das für das zwangsweise Umschalten von in dem ersten und/oder zweiten Modul enthaltenen Funktionsblöcken verantwortlich ist, wobei das erste Modul (A) mit einem Hebesystem (1) mit vertikaler Translation gemäß der Höhenrichtung (Z) arbeitet und das zweite Modul (B) mit einer rotierenden Struktur (2) arbeitet, die quer zur Ebene (XY) rotieren kann, wobei das erste Modul (A) einschließt:
i- eine Plattform (3) mit vertikaler Translation in Höhenrichtung (Z), zwischen zwei extremen Grenzpositionen;
ii- Säulen mit Führungskanälen (7', 7", .... 7⁽ⁿ) in dem Pfad, dem die Plattform (3) folgen kann, wenn sie betätigt wird, um sich vertikal in Höhenrichtung (Z) zu bewegen;
iii- Sensormittel (8), das verantwortlich ist für die Erfassung von physischen Umgebungsgrößen;
iv- Blockierungsmittel (24), das das Sensormittel (8), das in die Plattform (3) integriert ist, sichert, sowohl unter Bedingungen der Schutz als auch während der translatorischen Bewegung der Plattform nach oben oder nach unten;
das zweite Modul (B) wiederum umfasst:
a- eine rotierende Struktur (2)/Arm (4), die/der schwenkbar an eine feste Achse (5) gebunden ist, um die sie/er nur quer zur horizontalen Ebene (XY) zwischen zwei vorgegebenen Winkeln rotieren kann, einem von AUS entsprechend der Ruhelage und dem anderen von EIN, der streng vorbestimmt ist, weil der Arm (4) den Mast (6) präzise in die Mitte der vertikalen Translationsplattform (3) mit dem integralen Sensormittel (8) platziert, wobei die Achse eines Teleskopturms (Mast) (6) mit der Achse des Sensormittels (8) kollidiert;
b- eine teleskopische Stange/Mast (6), die/der ausfahrbar ist, um das Sensormittel (8) unter Erfassungsbedingungen auf maximale Höhe zu bringen;
c- Mittel zum Anheben des Teleskopturms (Mast) (6);
d- Mittel zum Verriegeln und Abdichten (23) des Sensormittels (8), das in den Teleskopturm (6) integriert ist, unter den Bedingungen der Erhebung des Teleskoptunns (6) selbst;
das dritte Modul (C), das für die Beschränkung verantwortlich ist, ist für den Austausch der Beschränkungen geeignet, die das Sensormittel (8) an der vertikalen Translationsplattform (3) befestigen, wobei die beschränkende Wirkung der Befestigung auf eine andere Stütze übertragen wird, die in den Teleskopturm/-mast (6) zum Heben des Sensormittels (8) integriert ist, genannt Modul (C), das dem Umschalten von Beschränkungen dient, wobei die Beschränkungen (23, 24) bei der Verwendung der Vorrichtung entweder mit der vertikalen Translationsplattform der Basisstütze (3) oder mit dem oberen Flansch des Teleskopturms (6) verbunden angeordnet werden, je nachdem, ob sich die Detektionsvorrichtung jeweils im Ruhe- oder Betriebszustand befindet.

2. Modulares System nach Anspruch 1, **gekennzeichnet durch** die Tatsache, dass die beiden Bestandteilmodule (A, B) Übertragungskomponenten wie hydraulische Kolben, Ketten, Antriebsschrauben, Motoren, Getriebe aufweisen, die durch die Anordnung von Dehnungsmessstreifen und/oder optischen und/oder elektromagnetischen Detektoren unterstützt werden, zum Detektieren der Abwesenheit/Anwesenheit des ersten Moduls (A) benachbart zum zweiten Modul (B), um sicherzustellen, dass ein Entscheidungsprozess durchgeführt wird, der jeweils die Rotationsbewegungsfunktionen der rotierenden modularen Struktur (2) aktiviert oder deaktiviert hält, die durch Sicherheitsverriegelungen beschränkt ist, die dazu ausgelegt sind, vorzeitig durchgeführte Relativbewegungen zu verhindern, die Kollisionen zwischen den Modulen selbst (A, B) verursachen können.

3. Modulares System nach Anspruch 1 und Anspruch 2, **gekennzeichnet durch** die Tatsache, dass die beiden Bestandteilmodule (A, B) Übertragungskomponenten wie hydraulische Kolben, Ketten, Antriebsschrauben, Motoren, Getriebe aufweisen, die durch die Anordnung von Dehnungsmessstreifen und/oder optischen und/oder elektromagnetischen Detektoren unterstützt werden, zur Erkennung der Abwesenheit/Anwesenheit des zweiten Moduls (B), das dem ersten Modul (A) zugrunde liegt, um sicherzustellen, dass ein Entscheidungsprozess implementiert wird, der jeweils die translatorischen Bewegungsfunktionen des Hebesystems (1) aktiviert oder deaktiviert hält, die durch Sicherheitsverriegelungen gebunden sind, die dazu ausgelegt sind, relative Bewegungen zu verhindern, die vorzeitig ausgeführt werden und Kollisionen zwischen den Modulen selbst (A, B) verursachen können.

4. Transportables modulares System nach den vorstehenden Ansprüchen, **gekennzeichnet durch** die Tatsache, dass die Beschränkungen des Schaltmoduls (C), die in der Lage sind, die Beschränkungen, die den Sensorblock (8) an der vertikalen Fahrplattform (3) sichern, durch Übertragung der Befestigungsbeschränkungen auf die in der Hubsäule/dem Mast (6) integrierte Halterung auszutauschen, und umgekehrt, aus einer Ringmutter (20) bestehen, die zu einer kreisförmigen Krone geformt ist, die als Beschränkungs-Austausch-Scheibe arbeitet, wobei die Scheibe von einer motorisierten Vorrichtung (21) angetrieben wird, die in die Trägerebene integriert ist, für eine Schwenkbewegung um die Achse des motorisierten Antriebs (21), durch die Schaltstange (35), wobei die Schwenkbewegung der Drehung auf eine vorbestimmte Winkelöffnung beschränkt ist, wobei sie so konfiguriert ist, dass das Einsetzen/Lösen der Halte- und Verriegelungsstifte (23', 23",... 23 N und 24', 24", ...... 24^{N}) jeweils ausgeführt wird, was es ermöglicht, den Sensorblock (8) zunächst an einer gegebenen Halterung auf der vertikalen Translationsplattform (3) zu befestigen, und dann die Befestigungsbeschränkungen am oberen Flansch zu ersetzen, der in die Mastsäule (6) integriert ist, teleskopisch zum Anheben des Sensorblocks (8), wobei die Ringmutter (20) mit einer Reihe von Löchern (26', 26".... 26^{N} und 27', 27",...27^{N}) konfiguriert ist, angeordnet entlang des mittleren Umfangs der kreisförmigen Krone, mit welcher derselbe Ring geformt ist (20), welche aufweisen:
a- einen linearen Abschnitt (L) mit einer kleinen Öffnungsweite wie zur Bildung einer Führungsnut für die Stützbolzen (23', 23",... 23^{N} und 24', 24",...24^{N}), die darin eingesetzt sind, jeweils in einer entsprechenden Bohrung;
b- einen Abschnitt (R), der als hohler Zylinder konfiguriert ist, mit einem Basisdurchmesser, der größer ist als die Breite des linearen Abschnitts (L), entsprechend der Position des Einsetzens (Herausnehmens) der Stifte (23', 23",... 23^{N,e} 24', 24",.... 24^{N}), die zu einem gegebenen Zeitpunkt in der Ringmutter (20) in dem als hohler Zylinder konfigurierten Abschnitt positioniert sind.

5. Modulares System nach den vorstehenden Ansprüchen, **gekennzeichnet durch** die Tatsache, dass die zylindrische Grundkonfiguration jedes Stifts (23', 23",... 23^{N} und 24', 24",.... 24^{N}) auf halber Höhe geschnitten/gerillt wird, wodurch zwei Abschnitte erhalten werden, die dem Stift ein Paar paralleler Ebenen auf den zwei gegenüberliegenden Seiten des Stifts verleihen, so dass jeder Stift im mittleren Teil zwei flache Flächen und zwei gerundete Flächen aufweist, wobei die zwei flachen mittleren Profile der Stifte (23', 23",... 23^{N} und 24', 24",.... 24^{N}) geeignet für die lineare Translation des Stifts in der Bohrung sind, in die er eingesetzt ist, wenn die Winkelauslenkung der Ringmutter durchgeführt wird (20), wobei die Abschnitte an den Enden, den unteren und oberen, jedes Stifts die zylindrische Konfiguration beibehalten, die für die Kopplung mit Spiel mit den kreisförmigen Abschnitten (R) der Löcher (26', 26".... 26^{N} und 27', 27",.... 27 ^{N}) der Ringmutter (20) erforderlich ist, für das mögliche Entweichen der verschiedenen Stiftsätze, wobei die zylindrischen Entlastungen - sowohl obere als auch untere - jedes Stifts geeignet sind, um sicherzustellen, dass jeder Stift (23', 23",... 23^{N} und 24', 24",.... 24N) und gemeinsam jeweils mit der Punktion (26', 26".... 26N, e 27', 27",... 27N) sowohl unter der Bedingung der Blockierung des Sensormittels (8) an der entsprechenden Plattform als auch im Pfad des Kreuzens des linearen Abschnitts (L) für die geführte Translation in der Nut der Bohrung (26', 26".... 26N 27', 27", .... 27N), entsprechend ist, wobei jeder Satz von Stiften (23, 24) stattdessen in der Lage ist, aus dem Ring (20) herauszukommen/aus diesem/in diesen einzuführen, wenn sie am kreisförmigen Abschnitt (R) der Bohrung (26', 26".... 26N und 27', 27", .... 27N) zentriert sind.

6. Modulares System nach den vorstehenden Ansprüchen, **gekennzeichnet durch** die Tatsache, dass das Sensormittel (8) bei Schutz und während des Transports in der Behälterstruktur (9) in derselben Position verbleibt, die es einnimmt, wenn es unter Detektionsbedingungen betriebsbereit ist, und dass sowohl die Translation der Plattform (3) in den Führungssäulen (7', 7", .... 7ⁿ) als auch das Heben/Senken mittels des Teleskopturms (6) durch isometrische Vertikalbewegungen der Bauteile des ersten Moduls (A) erfolgen, das vertikal verfahrbar ist.

7. Modulares System nach den vorstehenden Ansprüchen, **gekennzeichnet durch** die Tatsache, dass die Dimensionierung und Anordnung des Moduls (A) mit vertikaler Translation derart ist, dass die darin enthaltene Plattform (3) mit einem Hub translatiert werden kann, der zwischen einer ersten Ebene mit minimalem Abstand von der Gehoberfläche des äußeren Behälters bis zu einer zweiten Ebene mit minimalem Abstand von der Decke des äußeren Behälters variiert.

8. Modulares System nach den vorstehenden Ansprüchen, **gekennzeichnet durch** die Tatsache, dass in der Struktur, die für die Aufnahme des Sensormittels (8) verantwortlich ist, zusätzliche komplementäre Ausrüstung vorhanden ist, die für den Betrieb des Sensormittels selbst (8) erforderlich ist, wie elektronische Instrumentierung, Computer, Klimaanlagen der Betriebsumgebung, elektrische Generatoren, Funkverbindungen.

9. Verfahren zum Aktivieren eines Detektionssystems unter Verwendung eines modularen Systems nach den Ansprüchen 1 bis 8, **gekennzeichnet durch** die Tatsache, dass es die folgenden Schritte einschließt:
i- Anheben der vertikalen Translationsplattform (3) mit relativem Sensormittel (8) auf die maximale Höhe, die von ihr innerhalb des äußeren Behälters (9) erreichbar ist;
ii- sobald die vertikale Translationsplattform (3) angehoben wurde, wobei das darunterliegende Volumen freigegeben wurde, Übergehen zur Drehung, quer zur horizontalen Ebene (XY), der rotierenden modularen Struktur (2), die den Raum/das Volumen einnimmt, der/das verfügbar gemacht wird, durch Platzierung unter der Vertikalen der Plattform (3) und des zugehörigen Sensormittels (8), des Hebesystems, das in der rotierenden modularen Struktur (2) integriert ist, mit seinem Teleskopturm (6), wobei der Drehwinkel des Schwenkarms (4) streng vorbestimmt ist, weil er dazu dient, den Teleskopturmmast (6) zu platzieren, entsprechend genau dem Zentrum der Plattform (3) mit dem festen Sensormittel (8), um die Achse des Teleskopturmmasts (6) mit der Achse des Sensormittels (8) zu kollimieren;
iii- Anheben des Teleskopturms (6), bis sein oberer Flansch mit dem unteren Flansch des Schaltmoduls (C) in Kontakt kommt, wobei angehalten wird, um dem Modul (C) zu ermöglichen, Beschränkungen zwischen der vertikalen Translationsplattform (3) und dem oberen Flansch des Masts (6) auszutauschen;
iv- Durchführen des Umschaltens zwischen den Beschränkungen, die der Basisplattform (3) inhärent sind, und den Beschränkungen am oberen Flansch des Teleskopturms (6), wobei der Prozess der Beschränkungskommutierung selbst wiederum drei unterschiedliche Phasen umfasst:
iv-a- das Schaltmodul (C) befindet sich in der Position, in der es den Sensorblock (8) an die vertikale Fahrplattform (3) bindet;
iv-b- das Schaltmodul (C) dreht sich und beschränkt den Sensorblock (8) auf die vertikale Translationsplattform (3) und auf den oberen Flansch des Mastes (6), gleichzeitig, wobei in diesem Zustand die vertikale Translationsplattform (3) und der Mast (6) miteinander verbunden sind und jede Relativbewegung unmöglich ist;
iv-c- das Schaltmodul (C) dreht sich erneut und bindet das Sensormittel (8) an den oberen Flansch des Mastes (6), wobei gleichzeitig die Beschränkung von der vertikalen Translationsplattform (3) gelöst wird, wobei zu diesem Zeitpunkt das Sensormittel (8) fest an den Mast (6) gebunden und von der vertikalen Translationsplattform (3) gelöst ist;
v- sobald das Sensormittel (8) fest an dem Mast-Teleskopturm (6) befestigt/gebunden ist, Anheben des Teleskopturms (6), wodurch die Sensormittel (8) in Betriebsposition gebracht werden.

10. Transportables modulares System für den Schutz, Transport und die Anhebung von Sensormitteln, die in Mobilität betrieben werden, **gekennzeichnet durch** die Tatsache, dass es ein erstes Modul (I) und ein zweites Modul (II) nebeneinander einschließt, die miteinander zusammenwirken, wobei das erste Modul (I) als funktionaler Block mit vertikaler Translation gemäß der Richtung der Höhe (Z) der Behälterstruktur (51) arbeitet, und das zweite Modul (II) als funktionaler Block mit horizontaler Translation in der Längsrichtung (X) der Behälterstruktur (51) arbeitet und wobei das erste Modul (I) wiederum einschließt:
i- eine Plattform (53) mit vertikaler Translation in Richtung der Höhe (Z) der Behälterstruktur (51), zwischen zwei extremen Grenzpositionen (59, 59');
ii- Säulen mit Führungskanälen (54', 54", .... 54⁽ⁿ) in dem Pfad, dem die Plattform (53) folgen kann, wenn sie betätigt wird, um sich vertikal in Höhenrichtung (Z) zu bewegen;
iii- Sensormittel, das für die Erfassung von physischen Umgebungsgrößen verantwortlich ist;
iv- Flansch-Anschlagmittel, das das Sensormedium blockiert, das in der Plattform (53) integriert ist, sowohl unter Bedingungen des Schutzes als auch während der translatorischen Bewegung der Plattform nach oben oder nach unten;
und das zweite Modul (II) wiederum einschließt:
a- eine Plattform (52) mit horizontaler Translation in der Längsrichtung (X) der Behälterstruktur, zwischen zwei vorgegebenen Grenzpositionen (60, 60');
b- die Führungskanäle (55', 55") in dem Pfad, dem die Plattform (52) folgen kann, wenn sie vorwärts oder rückwärts betätigt wird;
c- einen Mast/Teleskopturm (58), der ausfahrbar ist, um den Sensorblock unter Erfassungsbedingungen auf maximale Höhe zu bringen;
d- Mittel zum Anheben (57) des Teleskopturms (58);
e- Mittel zum Anhalten mit Verriegelungsflanschen und Abdichtung des Sensorblocks, die in den Teleskopturm (58) integriert sind, unter den Bedingungen der Erhebung des Teleskopturms (58) selbst.

11. Modulares System nach Anspruch 10, **gekennzeichnet durch** die Tatsache, dass die beiden Bestandteilmodule (I, II) Übertragungskomponenten wie hydraulische Kolben, Ketten, Antriebsschrauben, Motoren, Getriebe aufweisen, die durch die Anordnung von Dehnungsmessstreifen und/oder optischen und/oder elektromagnetischen Detektoren unterstützt werden, um das Fehlen/Vorhandensein des ersten Moduls (I) benachbart zum zweiten Modul (II) zu detektieren, um sicherzustellen, dass ein Entscheidungsprozess implementiert wird, der jeweils die horizontale Translation der Plattform (52) aktiviert oder deaktiviert hält, die durch Sicherheitsverriegelungen eingeschränkt ist, die dazu ausgelegt sind, vorzeitig durchgeführte relative Bewegungen zu verhindern, die Kollisionen zwischen den Modulen selbst (I, II) verursachen können.

12. Verfahren zum Aktivieren eines Detektionssystems unter Verwendung eines modularen Systems nach Anspruch 10, **gekennzeichnet durch** die Tatsache, dass es die folgenden Schritte einschließt:
- Anheben der Plattform (53) mit relativem Sensormittel bis zur maximalen Höhe, die von der Plattform innerhalb des Behälters (51) erreichbar ist;
- sobald die Plattform (53) angehoben wurde und das darunterliegende Volumen freigegeben hat, Übergehen zur seitlichen Bewegung der Plattform (52), welche den verfügbar gemachten Raum/das verfügbar gemachte Volumen einnimmt, wobei unter die Vertikale der Plattform (53) und das zugehörige Sensormittel (56) das auf der Plattform (52) angeordnete Hebesystem (57) mit seinem Teleskopturm (58) platziert wird;
- Anheben des Mast-Teleskopturms (58), bis sein oberer Flansch mit dem unteren Flansch der an der Plattform (53) befestigten Sensormittel in Kontakt kommt;
- Beschränken des oberen Flansches (f) des Teleskopturms (58) mit dem unteren Flansch (f) des Sensormittels, wobei das Sensormittel unter solchen Bedingungen sowohl an die Plattform (53) als auch an den Teleskop-Hubturm (58) gebunden ist;
- Lösen der Beschränkungen, die das Sensormittel (56) an die Plattform (53) binden, um mit dem Anheben des teleskopischen Mastturms (58) fortzufahren;
- sobald das Sensormittel fest an dem Mast (58) befestigt/gebunden und von den Beschränkungen befreit ist, die es an die Plattform (53) banden, Anheben des Teleskopturms (58), der das Sensormittel in die Betriebsposition bringt.

## Revendications

1. Système modulaire pour l'abri, le transport, le positionnement et l'élévation de moyens de capteurs **caractérisé par** le fait de comporter un premier module (A) et un deuxième module (B) côte à côte et coopérant l'un avec l'autre, et un troisième module (C) d'interfaçage responsable de la commutation contraignante de blocs fonctionnels compris dans le premier et/ou deuxième module, le premier module (A) fonctionnant avec un système de levage (1) avec translation verticale, selon la direction de hauteur (Z), et le deuxième module (B) fonctionnant avec une structure rotative (2) capable d'une rotation transversalement au plan (XY), dans lequel le premier module (A) comporte:
i- une plateforme (3) avec une translation verticale dans la direction de hauteur (Z), entre deux positions limites extrêmes;
ii- des colonnes avec canaux de guidage (7', 7", ... 7⁽ⁿ) dans la trajectoire que la plateforme (3) est capable de suivre lorsqu'elle est actionnée pour se déplacer en translation verticalement dans la direction de hauteur (Z);
iii- des moyens de capteurs (8) responsables pour la détection de grandeurs physiques environnementales;
iv- des moyens de blocage (24) qui fixent les moyens de capteurs (8) solidaires de la plateforme (3), à la fois dans des conditions de rangement et pendant le mouvement de translation de la plateforme vers le haut ou vers le bas;
le deuxième module (B) comprend à son tour:
a- une structure rotative (2)/bras (4) pivotant lié à un axe fixe (5) autour duquel il ne peut qu'effectuer une rotation transversalement au plan horizontal (XY) entre deux angles prédéfinis, l'un de ARRÊT correspondant à la position de repos et l'autre de MARCHE étant strictement prédéterminé parce que le bras (4) va placer le mât (6) précisément au niveau du centre de la plateforme de translation verticale (3) avec les moyens de capteurs (8) intégrés, l'axe d'une tour (mât) télescopique (6) étant en collision avec l'axe des moyens de capteurs (8);
b- une perche/mât télescopique (6) extensible pour amener les moyens de capteurs (8) à une élévation maximale dans des conditions de captage;
c- des moyens d'élévation de la tour télescopique (mât) (6);
d- des moyens de verrouillage et d'étanchéité (23) des moyens de capteurs (8) solidaires de la tour télescopique (6), dans les conditions d'élévation de la tour télescopique (6) elle-même;
le troisième module (C) responsable pour la contrainte est approprié pour l'échange des contraintes qui fixent les moyens de capteurs (8) à la plateforme de translation verticale (3), transférant l'action de contrainte de fixation sur un autre support solidaire de la tour/du mât télescopique (6) de levage des moyens de capteurs (8), appelé module (C) dédié à la commutation de contraintes, venant agencer les contraintes (23, 24), lors de l'utilisation de l'appareil, ou interconnecté avec la plateforme de translation verticale du support de base (3) ou avec la bride supérieure de la tour télescopique (6) en fonction de si l'appareil de détection, respectivement, est au repos ou en conditions de fonctionnement.

2. Système modulaire selon la revendication 1 **caractérisé par le fait que** les deux modules (A, B) constitutifs ont des composants de transmission tels que des pistons hydrauliques, des chaînes, des vis d'entraînement, des moteurs, des réducteurs supportés par l'agencement de jauges de contrainte et/ou de détecteurs optiques et/ou électromagnétiques, pour détecter l'absence/présence du premier module (A) adjacent au deuxième module (B), pour s'assurer qu'un processus de prise de décision est mené qui, respectivement, active ou maintient désactivées les fonctions de mouvement de rotation de la structure modulaire rotative (2) contraintes par des interverrouillages de sécurité conçus pour empêcher des mouvements relatifs réalisés prématurément et qui peuvent provoquer des collisions entre les modules (A, B) eux-mêmes.

3. Système modulaire selon la revendication 1 et la revendication 2, **caractérisé par le fait que** les deux modules (A, B) constitutifs, ont des composants de transmission tels que des pistons hydrauliques, des chaînes, des vis d'entraînement, des moteurs, des réducteurs supportés par l'agencement de jauges de contrainte et/ou de détecteurs optiques et/ou électromagnétiques, pour la détection de l'absence/présence du deuxième module (B) sous-jacent au premier module (A), pour s'assurer qu'un processus de prise de décision est mis en œuvre qui, respectivement, active ou maintient désactivées les fonctions de mouvement de translation du système de levage (1) lié par des interverrouillages de sécurité conçus pour empêcher des mouvements relatifs réalisés prématurément et qui peuvent provoquer des collisions entre les modules (A, B) eux-mêmes.

4. Système modulaire transportable selon les revendications précédentes, **caractérisé par le fait que** les contraintes du module de commutation (C) capables d'échanger les contraintes assujettissant le bloc de capteurs (8) à la plateforme de déplacement vertical (3) en transférant les contraintes de fixation au support solidaire de la colonne/du mât de levage (6), et inversement, est constitué d'un écrou en anneau (20), conformé à une couronne circulaire, qui fonctionne comme un disque d'échange de contrainte, appelé disque étant entraîné par un dispositif motorisé (21), solidaire du plan de support, pour un mouvement pivotant autour de l'axe de l'entraînement motorisé (21), à travers la tige de commutation (35), appelé mouvement de pivot, de rotation, limité à une ouverture angulaire prédéterminée, étant conçu de sorte que l'insertion/désolidarisation des broches de support et de verrouillage est effectuée (23', 23",... 23^{N} et 24', 24", ..... 24^{N}), respectivement, ce qui permettent de fixer initialement le bloc de capteurs (8) à un support donné sur la plateforme de translation verticale (3), puis, de remplacer les contraintes de fixation sur la bride supérieure, solidaire de la colonne de mât (6) télescopique pour soulever le bloc de capteurs (8), l'écrou en anneau (20) étant conçu avec une série de trous (26', 26"... 26^{N}, et 27', 27",... 27^{N}) agencés le long de la circonférence médiane de la couronne circulaire avec laquelle le même anneau est façonné (20), qui ont:
a- une section linéaire (L) avec une faible largeur d'ouverture de telle sorte à constituer une rainure de guidage pour les broches de support (23', 23",... 23^{N} et 24', 24",... 24^{N}) insérées à l'intérieur, chacune dans un perçage relatif;
b- une section (R) conçue comme un cylindre creux, avec un diamètre de base supérieur à la largeur de la section linéaire (L), correspondant à la position de (dés) insertion des broches (23', 23",... 23^{N,e} 24', 24",... 24^{N}) qui sont positionnées dans l'écrou en anneau (20) à un moment donné, dans la section conçue avec un cylindre creux.

5. Système modulaire selon les revendications précédentes, **caractérisé par le fait que** la conception cylindrique de base de chaque broche (23', 23",... 23^{N} et 24', 24",... 24^{N}) est coupée/rainurée à mi-hauteur obtenant deux sections qui donnent à la broche une paire de plans parallèles sur les deux côtés opposés de la broche, de sorte que chaque broche, dans la partie centrale, a deux faces plates et deux faces arrondies, les deux profils médians plats des broches (23', 23",... 23^{N} et 24', 24",... 24^{N}) étant adaptés à la translation linéaire de la broche dans le perçage dans lequel elle est insérée lorsque la rotation angulaire de l'écrou en anneau est réalisée (20), les sections au niveau des extrémités, inférieure et supérieure, de chaque broche maintenant la conception cylindrique nécessaire pour l'accouplement avec dégagement, avec les sections circulaires (R) des trous (26', 26"... 26^{N}, et 27', 27", ... 27 ^{N}) de l'écrou en anneau (20), pour l'échappement éventuel des différents ensembles de broches, les reliefs cylindriques - à la fois supérieurs et inférieurs - de chaque broche, étant appropriés pour s'assurer que chaque broche (23', 23",... 23^{N} et 24', 24",... 24N) et de manière solidaire, respectivement, à la ponction (26', 26"... 26N, e 27', 27",... 27N) correspondante, à la fois dans la condition de blocage des moyens de capteurs (8) à la plateforme relative, et dans la trajectoire de franchissement de la section linéaire (L) pour une translation guidée dans la rainure du perçage (26', 26"... 26N 27', 27", ... 27N), chaque ensemble de broches (23, 24) étant, au contraire, aptes à sortir/s'insérer à partir de/dans l'anneau (20) lorsqu'elles sont centrées au niveau de la section circulaire (R) du perçage (26', 26"... 26N, et 27', 27", ... 27N).

6. Système modulaire selon les revendications précédentes **caractérisé par le fait que** les moyens de capteurs (8), lors du rangement et pendant le transport, résident dans la structure de conteneur (9) dans la même position qu'ils adoptent lorsqu'ils sont fonctionnels dans des conditions de détection, à la fois la translation de la plateforme (3) dans les colonnes de guidage (7', 7", ... 7ⁿ) est l'élévation / l'abaissement, avec la tour télescopique (6) ayant lieu à travers des déplacements isométriques des parties composantes du premier module (A) apte à se déplacer en translation verticalement.

7. Système modulaire selon les revendications précédentes **caractérisé par le fait que** le dimensionnement et l'agencement du module (A) avec translation verticale sont tels que la plateforme (3) contenue à l'intérieur peut être translatée avec une course qui varie entre un premier niveau de distance minimale par rapport à la surface de marche du conteneur externe, à un second niveau de distance minimale par rapport au plafond du conteneur externe.

8. Système modulaire selon les revendications précédentes **caractérisé par le fait que** dans la structure responsable pour le confinement des moyens de capteurs (8) il existe des équipements complémentaires supplémentaires nécessaires au fonctionnement des moyens de capteurs (8) eux-mêmes, tels qu'une instrumentation électronique, des ordinateurs, des climatiseurs de l'environnement de fonctionnement, des générateurs électriques, des liaisons radio.

9. Procédé d'activation d'un système de détection à l'aide d'un système modulaire selon les revendications 1 à 8, **caractérisé par le fait qu'**il comporte les étapes suivantes:
i- soulever la plateforme de translation verticale (3) avec des moyens de capteurs (8) relatifs jusqu'à la hauteur maximale pouvant être atteinte par celle-ci à l'intérieur du conteneur externe (9);
ii- une fois que la plateforme de translation verticale (3) a été soulevée, le volume sous-jacent ayant été libéré, procéder à la rotation, transversalement au plan horizontal (XY), de la structure modulaire rotative (2) qui occupe l'espace/volume, rendu disponible, en plaçant sous la verticale de la plateforme (3) et les moyens de capteurs (8) associés, le système d'élévation solidaire de la structure modulaire rotative (2), avec sa tour télescopique (6), l'angle de rotation du bras pivotant (4) étant strictement prédéterminé car il va placer le mât de tour télescopique (6), correspondant précisément au centre de la plateforme (3) avec les moyens de capteurs (8) solides, collimater l'axe du mât de tour télescopique (6) avec l'axe des moyens de capteurs (8);
iii- soulever la tour télescopique (6) jusqu'à ce que sa bride supérieure entre en contact avec la bride inférieure du module de commutation (C) s'arrêtant pour permettre au module (C) d'échanger des contraintes entre la plateforme de translation verticale (3) et la bride supérieure du mât (6);
iv- réaliser la commutation entre les contraintes solidaires de la plateforme de base (3) et les contraintes sur la bride supérieure de la tour télescopique (6), le processus de contrainte de commutation lui-même composant, à son tour, trois phases distinctes:
iv-a- le module de commutation (C) est situé dans la position où il contraint le bloc de capteurs (8) à la plateforme de déplacement vertical (3);
iv-b- le module de commutation (C) entre en rotation et contraint le bloc de capteurs (8) à la plateforme de translation verticale (3) et à la bride supérieure du mât (6), simultanément, dans cette condition la plateforme de translation verticale (3) et le mât (6) étant contraints l'un à l'autre et rendant impossible un quelconque mouvement relatif;
iv-c- le module de commutation (C) entre à nouveau en rotation et lie les moyens de capteurs (8) à la bride supérieure du mât (6), libérant simultanément la contrainte de la plateforme de translation verticale (3), au niveau de ce point les moyens de capteurs (8) étant fermement liés au mât (6) et libérés de la plateforme de translation verticale (3);
v- une fois que les moyens de capteurs (8) sont fermement fixés/liés à la tour télescopique de mât (6), soulever la tour télescopique (6) qui amène les véhicules capteurs (8) en position fonctionnelle.

10. Système modulaire transportable destiné à l'abri, au transport et à l'élévation de véhicules capteurs fonctionnant en mobilité, **caractérisé par** le fait de comporter un premier module (I) et un deuxième module (II) côte à côte et coopérant l'un avec l'autre, le premier module (I) fonctionnant comme un bloc opérationnel avec translation verticale, selon la direction de la hauteur (Z) de la structure de conteneur (51), et le deuxième module (II) fonctionnant en tant que bloc opérationnel avec translation horizontale, dans la direction longitudinale (X) de la structure de conteneur (51) et dans lequel le premier module (I) comporte à son tour:
i- une plateforme (53) avec une translation verticale dans la direction de la hauteur (Z) de la structure de conteneur (51), entre deux positions limites extrêmes (59, 59');
ii- des colonnes avec canaux de guidage (54', 54", ... 54⁽ⁿ) de la trajectoire que la plateforme (53) est apte à suivre lorsqu'elle est actionnée pour se déplacer en translation verticalement dans la direction de hauteur (Z);
iii- des moyens de capteurs responsables pour la détection de grandeurs physiques environnementales;
iv- des moyens d'arrêt de bride qui bloquent le milieu de capteur solidaire de la plateforme (53), à la fois dans des conditions d'abri et pendant le mouvement de translation de la plateforme vers le haut ou vers le bas;
et le deuxième module (II) comporte à son tour:
a- une plateforme (52) avec translation horizontale dans la direction longitudinale (X) de la structure de conteneur, entre deux positions limites prédéfinies (60, 60');
b- les canaux de guidage (55', 55") dans la trajectoire que la plateforme (52) est apte à suivre, lorsqu'elle est actionnée vers l'avant ou vers l'arrière;
c- un mât/tour télescopique (58) extensible pour amener le bloc de capteurs à une élévation maximale dans des conditions de détection;
d- des moyens d'élévation (57) de la tour télescopique (58);
e- des moyens d'arrêt avec des brides de verrouillage et d'étanchéité du bloc de capteurs solidaire de la tour télescopique (58), dans les conditions d'élévation de la tour télescopique (58) elle-même-.

11. Système modulaire selon la revendication 10, **caractérisé par le fait que** les deux modules (I, II) constitutifs, ont des composants de transmission tels que des pistons hydrauliques, des chaînes, des vis d'entraînement, des moteurs, des réducteurs supportés par l'agencement de jauges de contrainte et/ou de détecteurs optiques et/ou électromagnétiques, pour détecter l'absence/la présence du premier module (I) adjacent au deuxième module (II), pour s'assurer qu'un processus de prise de décision est mis en œuvre qui, respectivement, active ou maintient désactivée la translation horizontale de la plateforme (52) contrainte par des interverrouillages de sécurité conçus pour empêcher des mouvements relatifs effectués prématurément et qui peuvent provoquer des collisions entre les modules (I, II) eux-mêmes.

12. Procédé d'activation d'un système de détection à l'aide d'un système modulaire selon la revendication 10, **caractérisé par le fait qu'**il comporte les étapes suivantes:
- soulever la plate-forme (53) avec des moyens relatifs de capteurs jusqu'à la hauteur maximale pouvant être atteinte par la plateforme à l'intérieur du conteneur (51);
- une fois que la plateforme (53) a été soulevée, après avoir libéré le volume sous-jacent, procéder au mouvement latéral de la plateforme (52) qui occupe l'espace/volume, rendu disponible, en plaçant sous la verticale de la plateforme (53) et les moyens de capteurs (56) associés, le système de levage (57) placé sur la plateforme (52), avec sa tour télescopique (58);
- soulever la tour télescopique de mât (58) jusqu'à ce que sa bride supérieure entre en contact avec la bride inférieure des véhicules capteurs fixés à la plateforme (53);
- contraindre la bride supérieure (f) de la tour télescopique (58) avec la bride inférieure (f) des moyens de capteurs, les moyens de capteurs résultant en de telles conditions, en même temps, liés à la fois à la plateforme (53) et à la tour d'élévation télescopique (58);
- désolidariser les contraintes qui lient les moyens de capteurs (56) à la plateforme (53) pour procéder au soulèvement de la tour télescopique de mât (58);
- une fois que les moyens de capteurs sont solidement fixés/liés au mât (58) et libérés des contraintes qui les liaient à la plateforme (53), soulever la tour télescopique (58) qui amène les moyens de capteurs en position fonctionnelle.
